(19) Europäisches Patentamt / European Patent Office / Office européen des brevets

(11) EP 4 539 378 A1

(12) **EUROPEAN PATENT APPLICATION**

(43) Date of publication:
**16.04.2025 Bulletin 2025/16**

(21) Application number: **24205857.6**

(22) Date of filing: **10.10.2024**

(51) International Patent Classification (IPC):
***H04L 5/00*** *(2006.01)* ***H04L 1/00*** *(2006.01)*
***H04W 72/23*** *(2023.01)*

(52) Cooperative Patent Classification (CPC):
**H04L 5/0053; H04L 1/0038; H04L 5/001; H04L 5/0094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.10.2023 US 202363543658 P**
**23.10.2023 US 202363545312 P**
**03.10.2024 US 202418905800**

(71) Applicant: **Samsung Electronics Co., Ltd**
**Suwon-si, Gyeonggi-do 16677 (KR)**

(72) Inventor: **BAE, Jung Hyun**
**San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **SYSTEMS AND METHODS FOR PHYSICAL DOWNLINK CONTROL CHANNEL (PDCCH) SPAN-BASED MONITORING**

(57) A system and a method are disclosed for PDCCH span-based monitoring, the method includes sending, by a user equipment, UE, first information indicating that the UE supports a first set of capabilities and a second set of capabilities different from the first set of capabilities, determining, by the UE, whether a monitored span pattern satisfies a first span pattern associated with the first set of capabilities, and performing, by the UE, physical downlink control channel, PDCCH, span-based monitoring based on a first value associated with the first set of capabilities or based on a second value associated with the second set of capabilities.

FIG. 1A

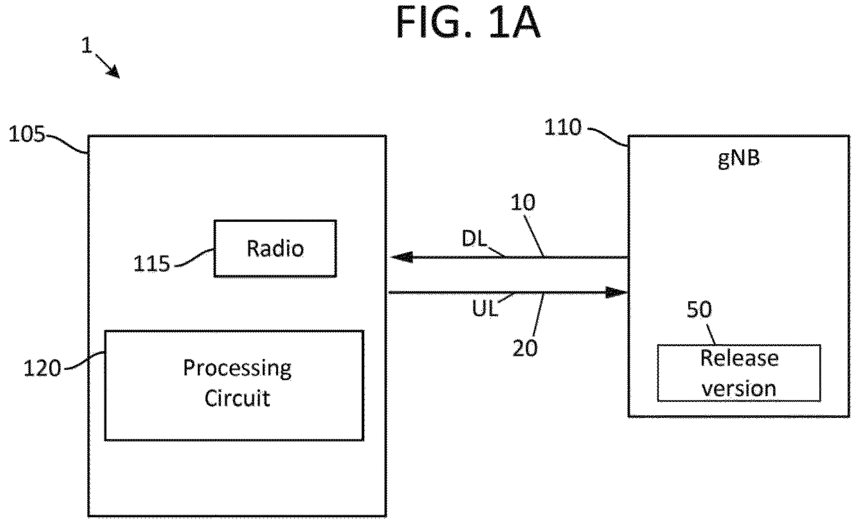


EP 4 539 378 A1

## Description

## BACKGROUND

### 1. Field

Aspects of embodiments of the present disclosure relate to wireless communications. For example, aspects of embodiments of the present disclosure relate to improved systems and methods for physical downlink control channel (PDCCH) span-based monitoring.

### 2. Description of the Related Art

Modern communications equipment (e.g., mobile phones, vehicles, laptops, satellites, and the like), also known as user equipment (UE), may communicate with a network node (e.g., a base station, also referred to as a gNB) to receive data from a network associated with the network node and to transmit data to the network associated with the network node. The UE may perform capability signaling by sending (e.g., by reporting) information to the network node to indicate features that the UE is capable of supporting. The network node may configure resources for the UE based on the reported capabilities of the UE. For example, the network node may send PDCCH monitoring occasion configurations to the UE based on the reported capabilities. The PDCCH monitoring occasion configurations may be resources that are configured by the network node for use by the UE in monitoring for control information from the network node. The UE may perform PDCCH span-based monitoring based on the PDCCH monitoring occasion configurations. The UE may perform monitoring of scheduling information from the network node based on the PDCCH monitoring occasion configurations. The PDCCH monitoring occasion configurations may be associated with a variety span pattern for the UE to use in performing PDCCH span-based monitoring. In some situations, some reported capabilities may lead to ambiguities (e.g., may lead to uncertainties) with how the network node may configure monitoring resources for the UE and/or with how the UE may perform PDCCH span-based monitoring. For example, two or more reported capabilities from the UE may include conflicting information, which may prevent the communications system from operating properly.

The above information disclosed in this Background section is for enhancement of understanding of the background of the present disclosure, and, therefore, it may contain information that does not constitute prior art.

## SUMMARY

Release 16 of the Third Generation Partnership Project (3GPP) Specification (hereinafter "Release 16") provides for PDCCH monitoring and includes feature group (FG) 11-2. Release 16 also provides for FGs 11-2a, 11-2b, 11-2c, 11-2d, 11-2e, 11-2f, and 11-2g, which are supplementary capabilities for supporting the operation of FG 11-2. Release 17 of the 3GPP Specification (hereinafter "Release 17") provides for repetition functionality, which is based on span-based monitoring, and includes FG 23-2-1e, which is another supplementary capability for supporting the operation of FG 11-2.

FG 11-2 provides for a variety of span patterns for performing PDCCH span-based monitoring. As discussed in further detail below, different span patterns may provide a different balance between a scheduling latency for the system and a monitoring burden for the UE. For example, the capabilities of Release 16 and Release 17 may be associated with the span patterns (7, 3), (4, 3), and (2, 2). Based on the (2, 2) span pattern, the UE may experience a monitoring burden that is difficult (e.g., too difficult) for some UEs.

Release 18 of the 3GPP Specification (hereinafter "Release 18") provides for a modified (e.g., a relaxed) version of the (2, 2) span pattern, and includes FG 55-6. Release 18 also provides for FGs 55-6a, 55-6b, 55-6c, 55-6d, 55-6e, 55-6f, 55-6g, and 55-6h, which are supplementary capabilities for supporting the operation of FG 55-6. Each of FGs 55-6, 55-6a, 55-6b, 55-6c, 55-6d, 55-6e, 55-6f, 55-6g, and 55-6h were created to respectively mirror each of FGs 11-2, 11-2a, 11-2b, 11-2c, 11-2d, 11-2e, 11-2f, 11-2g, and 23-2-1e. For example, FG 55-6a mirrors FG 11-2a, FG 55-6g mirrors FG 11-2g, and FG 55-6h mirrors FG 23-2-1e.

The modified version of the (2, 2) span pattern (hereinafter the "Relaxed (2, 2)") may lessen the monitoring burden for UEs and make it easier for some UEs to perform PDCCH span-based monitoring that is similar to, but relaxed from, the (2, 2) span pattern (hereinafter the "Original (2, 2)"). The mirroring of FGs 55-6, 55-6a, 55-6b, 55-6c, 55-6d, 55-6e, 55-6f, 55-6g, and 55-6h with corresponding ones of FGs 11-2, 11-2a, 11-2b, 11-2c, 11-2d, 11-2e, 11-2f, 1 1-2g, and 23-2-1e enables a UE to send information indicating support for the capabilities of Release 18 (e.g., FG 55-6 and its supplementary capabilities) without also indicating support for the capabilities of Releases 16 and 17 (e.g., FG 11-2 and its supplementary capabilities).

However, ambiguities (e.g., uncertainties) may arise when a UE that is not capable of supporting the Original (2, 2) supports other span patterns such as (4, 3) and (7, 3) from FG 11-2 while also indicating support of one or more of the supplementary capabilities of FG 11-2 (e.g., one or more of 11-2a, 11-2b, 11-2c, 11-2d, 11-2e, 11-2f, 11-2g, and 23-2-1e) and support of the Relaxed (2, 2) in FG 55-6. The ambiguities may prevent the system from operating properly. For example, ambiguous capability signaling may cause the system to drop calls.

To overcome these issues, systems and methods are described herein for communicating information for PDCCH span-based monitoring when a UE is capable of supporting both: (i) features from a first set of capabilities, associated with Release 18, including one or more of FGs 55-6, 55-6a, 55-6b, 55-6c, 55-6d, 55-6e, 55-6f, 55-6g, and 55-6h (also referred to herein as 55-6x) and (ii) features from a second set of capabilities, associated with Releases 16 and 17, including one or more of FGs 11-2, 11-2a, 11-2b, 11-2c, 11-2d, 11-2e, 11-2f, 11-2g, and 23-2-1e (also referred to herein as 11-2x).

Some embodiments of the present disclosure are directed to sending, by a UE, information (e.g., via capability signaling) to indicate capabilities that, when reported together, might otherwise cause ambiguities resulting from two versions of similar supplementary capabilities from 11-2x (e.g., 11-2a, 11-2b, 11-2c, 11-2d, 11-2e, 11-2f, 11-2g, and 23-2-1e) and 55-6x (e.g., 55-6a, 55-6b, 55-6c, 55-6d, 55-6e, 55-6f, 55-6g, and 55-6h), which may be indicated (e.g., simultaneously indicated) by a UE supporting: (i) span patterns, other than the Original (2, 2), from 11-2 and (ii) the Relaxed (2, 2) span pattern.

Some embodiments of the present disclosure are directed to determining (e.g., detecting), by a UE that is capable of performing features associated with Release 18 and capable of performing features associated with Release 16 and/or Release 17, a span pattern configured by a serving cell, and performing PDCCH span-based monitoring based on the determined (e.g., the detected) span pattern.

Some embodiments of the present disclosure are directed to using, by a network node, a union of supported span patterns associated with Releases 16, 17, and 18, when a UE is capable of monitoring multiple combinations of span patterns and the UE is capable of performing features associated with Release 18 and capable of performing features associated with Release 16 and/or Release 17.

Some embodiments of the present disclosure are directed to determining, by a UE, features and values associated with the features to report and to use for performing PDCCH span-based monitoring when the UE is capable of performing features associated with Releases 16, 17, and 18.

The above approaches improve on previous methods by reducing the risk that a network may not be able to operate properly based on ambiguous information associated with a UE reporting support for similar capabilities (e.g., conflicting capabilities) from Releases 16, 17, and 18.

According to some embodiments of the present disclosure, a method for PDCCH span-based monitoring includes sending, by a user equipment (UE), first information indicating that the UE supports a first set of capabilities and a second set of capabilities different from the first set of capabilities, determining, by the UE, whether a monitored span pattern satisfies a first span pattern associated with the first set of capabilities, and performing, by the UE, physical downlink control channel (PDCCH) span-based monitoring based on a first value associated with the first set of capabilities or based on a second value associated with the second set of capabilities.

The first information may include the first value, the first span pattern may be a relaxed (2, 2) span pattern including a span of two symbols, a span gap of two symbols, and one or more additional symbols between spans, the monitored span pattern may satisfy the relaxed (2, 2) span pattern, and the performing may be based on the first value.

The first information may include the second value, the monitored span pattern may satisfy a second span pattern that is not a relaxed (2, 2) span pattern, the second span pattern may be associated with the second set of capabilities, and the performing may be based on the second value.

The first set of capabilities may include one or more of feature groups 55-6, 55-6a, 55-6b, 55-6c, 55-6d, 55-6e, 55-6f, 55-6g, or 55-6h, and the second set of capabilities may include one or more of feature groups 11-2, 11-2a, 11-2b, 11-2c, 11-2d, 11-2e, 11-2f, 11-2g, or 23-2-1e.

The method may further include receiving, by the UE, as part of a carrier aggregation (CA) transmission or a dual connectivity (DC) transmission, a plurality of PDCCH monitoring occasion configurations associated with corresponding ones of a plurality of cells serving the UE, wherein the determining, by the UE, whether the monitored span pattern satisfies the first span pattern includes determining a number of cells associated with the plurality of PDCCH monitoring occasion configurations that satisfy the first span pattern, and based on the number of cells satisfying a first threshold, performing the PDCCH span-based monitoring based on the first set of capabilities.

The first threshold may be more likely than not to trigger a usage of the first set of capabilities.

The first threshold may correspond to the number of cells being greater than or equal to one.

The method may further include based on the number of cells not satisfying the first threshold, performing the PDCCH span-based monitoring based on the second value.

The first threshold may be more likely than not to trigger a usage of the second set of capabilities.

The first threshold may correspond to the number of cells being equal to a total number of cells serving the UE.

The physical downlink control channel (PDCCH) span-based monitoring may be performed based on the number of cells associated with the plurality of PDCCH monitoring occasion configurations that satisfy the first span pattern, based on determining that the cells of a plurality of cells serving the UE are not aligned.

According to other embodiments of the present disclosure, a method for PDCCH span-based monitoring includes sending, by a user equipment (UE), first information indicating that the UE is capable of monitoring multiple span-pattern combinations, and the UE supports a first set of capabilities and a second set of capabilities, and based on a union of supported span patterns in the first set of capabilities and supported span patterns in the second set of capabilities, performing, by the UE, physical downlink control channel (PDCCH) span-based monitoring.

The performing the PDCCH span-based monitoring based on the sending of the first information may include determining per-span blind decodings (BD) or determining per-span control carrier elements (CCE) based on a union of supported span patterns in the first set of capabilities and supported span patterns in the second set of capabilities.

The first set of capabilities may include one or more of feature groups 55-6, 55-6a, 55-6b, 55-6c, 55-6d, 55-6e, 55-6f, 55-6g, or 55-6h, and the second set of capabilities may include one or more of feature groups 11-2, 11-2a, 11-2b, 11-2c, 11-2d, 11-2e, 11-2f, 11-2g, or 23-2-1e.

According to other embodiments of the present disclosure, a method for PDCCH span-based monitoring includes sending, by a user equipment (UE) that is capable of supporting a first set of capabilities and a second set of capabilities, first information indicating whether the UE is capable of supporting the first set of capabilities and/or the second set of capabilities, and performing, by the UE, PDCCH span-based monitoring based on the sending of the first information, wherein the first set of capabilities includes features associated with a first span pattern, and wherein the second set of capabilities includes features associated with a second span pattern.

The first span pattern may be a relaxed (2, 2) span pattern, and the first information may include only features of one set selected from among the first set of capabilities and the second set of capabilities, such that the UE does not send information indicating that the UE is capable of supporting features from both the first set of capabilities and the second set of capabilities.

The method may further include receiving, by the UE, information indicating only one set selected from among the first set of capabilities and the second set of capabilities as including valid features associated with a network node, wherein the first information includes only features of the one set selected from among the first set of capabilities and the second set of capabilities.

The first information may indicate that the UE is capable of supporting both the first set of capabilities and the second set of capabilities, and each of first values provided in the first information for the first set of capabilities may be equal to corresponding ones of second values provided in the first information for the second set of capabilities.

The first information may indicate a selected value that is selected from between two values including a first value of a first feature of the first set of capabilities, and a second value of a corresponding first feature of the second set of capabilities, based on the selected value being a smaller value of the two values.

The first information may indicate a selected value that is selected from between two values including a first value of a first feature of the first set of capabilities, and a second value of a corresponding first feature of the second set of capabilities, based on the selected value being a larger value of the two values.

## BRIEF DESCRIPTION OF THE DRAWINGS

The above and other aspects of the present disclosure will be more clearly understood from the following detailed description of the illustrative, non-limiting embodiments with reference to the accompanying drawings.

FIG. 1A is a block diagram depicting a system for sending information for performing PDCCH span-based monitoring, according to some embodiments of the present disclosure.

FIG. 1B is a block diagram depicting relationships between feature groups from Releases 16, 17, and 18, according to some embodiments of the present disclosure.

FIG. 2 is a block diagram depicting a transmission of component carriers in the system of FIG. 1A.

FIGS. 3A-11B are 3GPP table entries from UE features listings for a set of capabilities associated with Release 16 and Release 17.

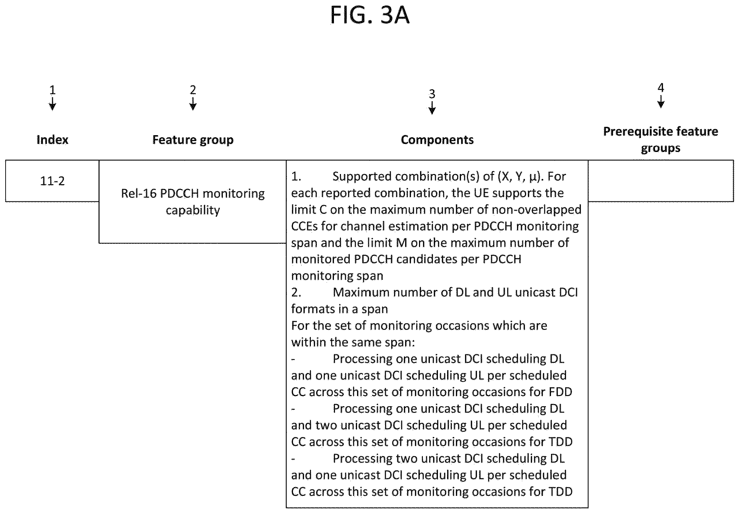

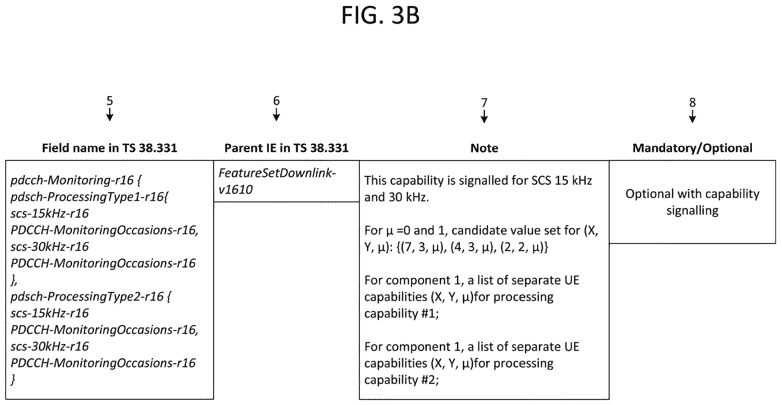

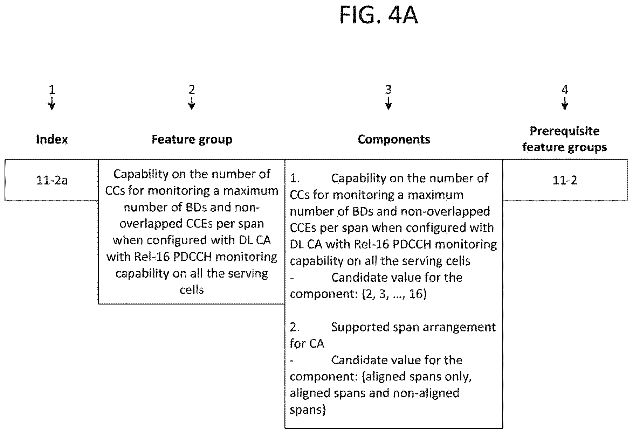

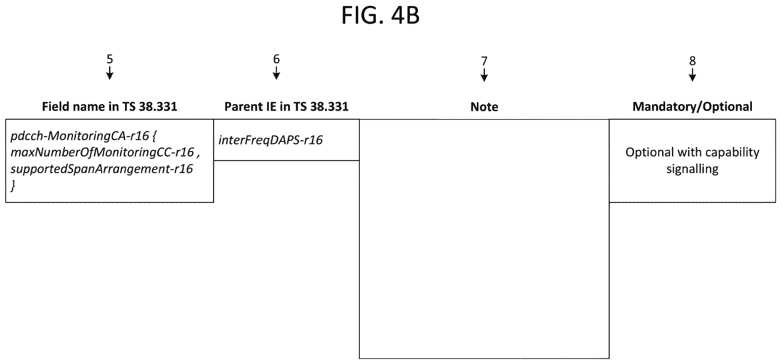

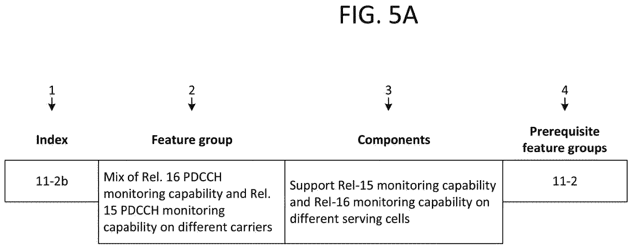

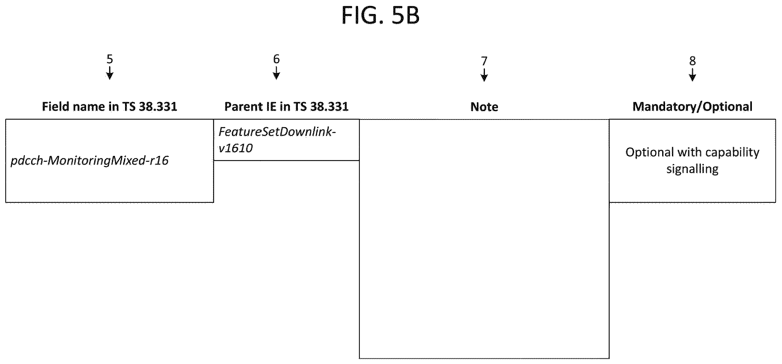

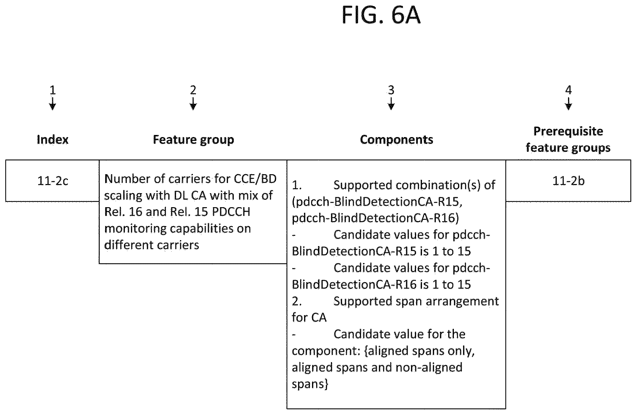

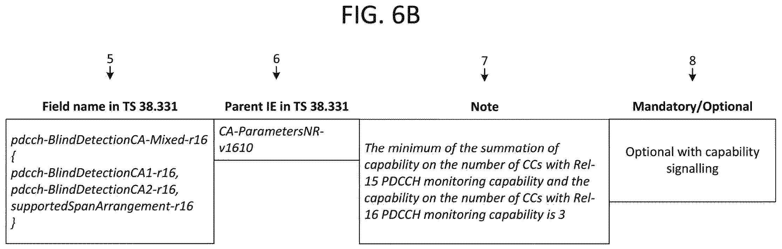

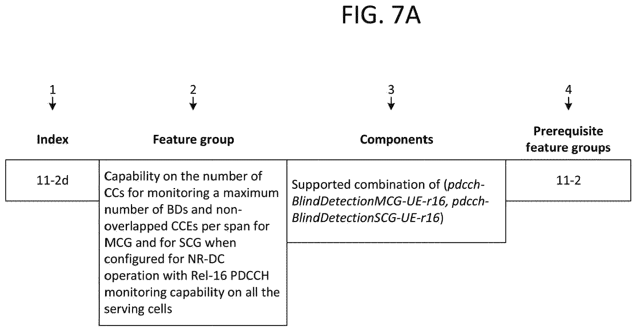

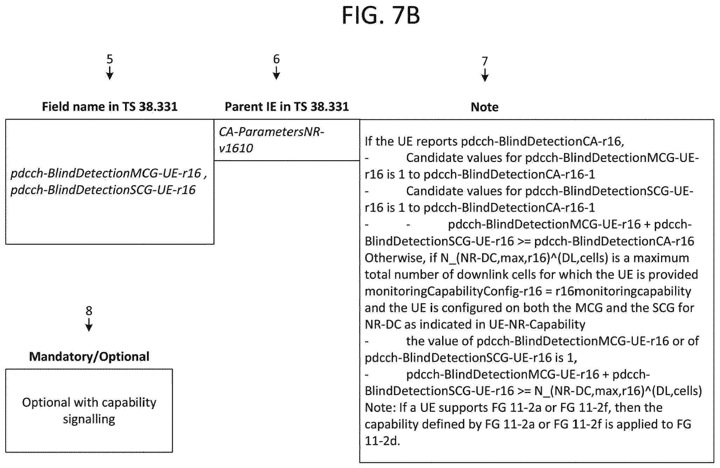

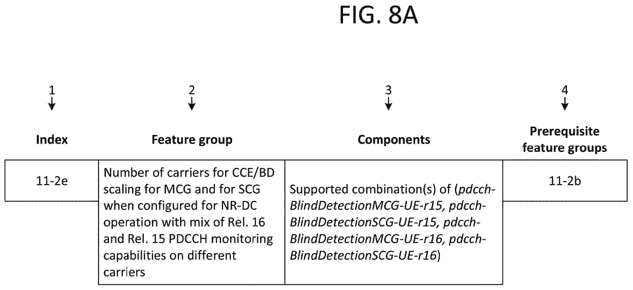

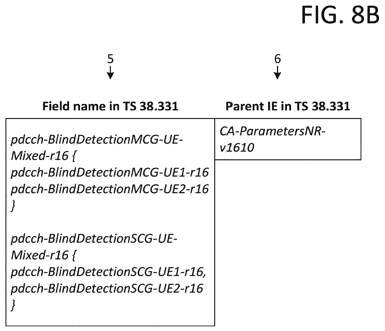

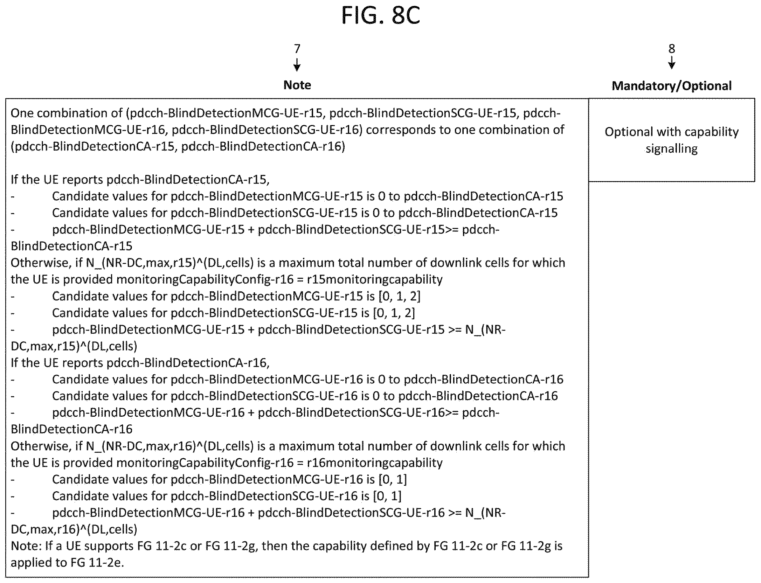

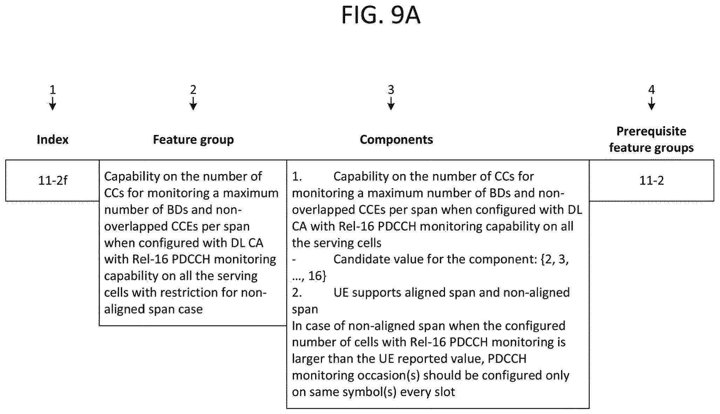

FIG. 3A is a diagram depicting table entries from a Radio Access Network 1 (RAN1) UE features listing for index number 11-2. FIG. 3B is a diagram depicting additional table entries from the RAN1 UE features listing for index number 11-2. FIG. 4A is a diagram depicting table entries from the RAN1 UE features listing for index number 11-2a. FIG. 4B is a diagram depicting additional table entries from the RAN1 UE features listing for index number 1 1-2a. FIG. 5A is a diagram depicting table entries from the RAN1 UE features listing for index number 11-2b. FIG. 5B is a diagram depicting additional table entries from the RAN1 UE features listing for index number 11-2b. FIG. 6A is a diagram depicting table entries from the RAN1 UE features listing for index number 11-2c. FIG. 6B is a diagram depicting additional table entries from the RAN1 UE features listing for index number 11-2c. FIG. 7A is a diagram depicting table entries from the RAN1 UE features listing for index number 11-2d. FIG. 7B is a diagram depicting additional table entries from the RAN1 UE features listing for index number 11-2d. FIG. 8A is a diagram depicting table entries from the RAN1 UE features listing for index number 11-2e. FIG. 8B is a diagram depicting additional table entries from the RAN1 UE features listing for index number 11-2e. FIG. 8C is a diagram depicting additional table entries from the RAN1 UE features listing for index number 11-2e. FIG. 9A is a diagram depicting table entries from the RAN1 UE features listing for index number 11-2f.

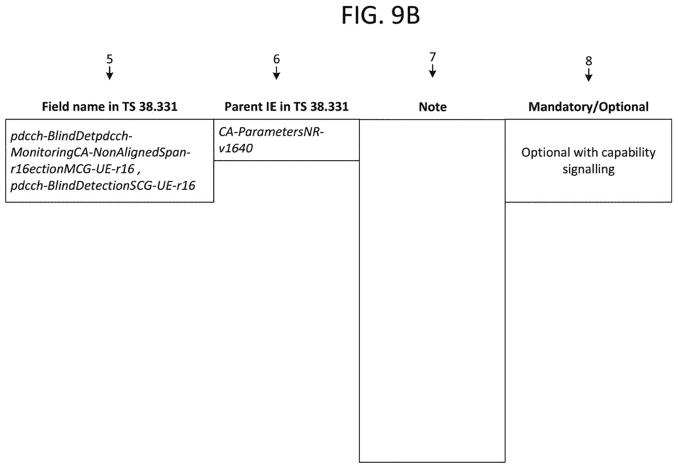

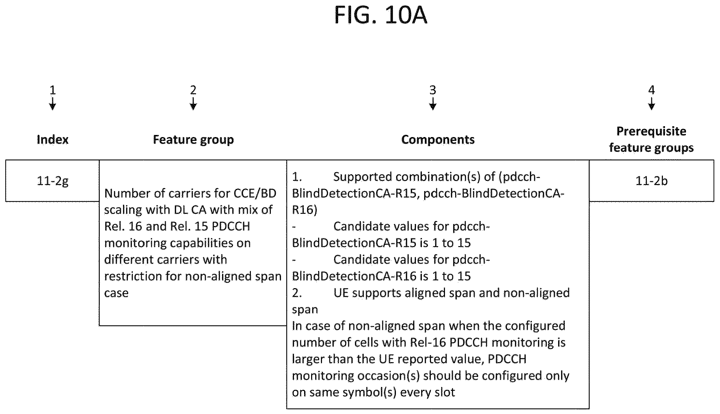

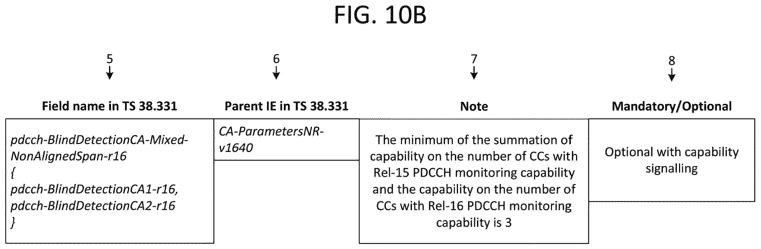

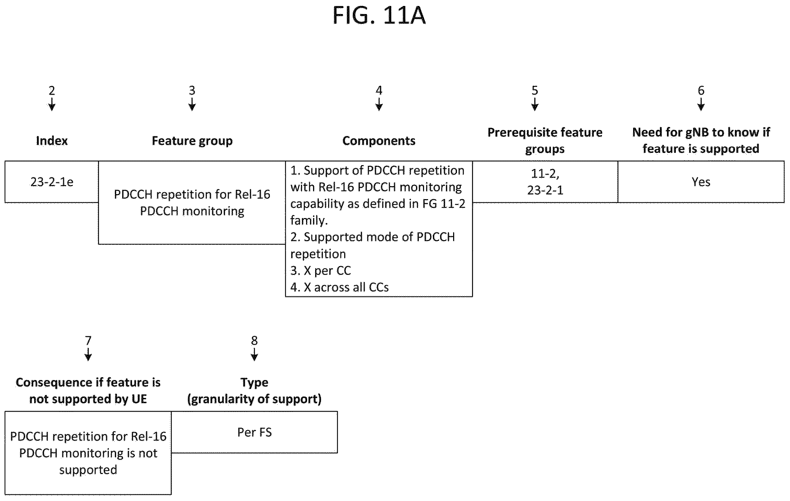

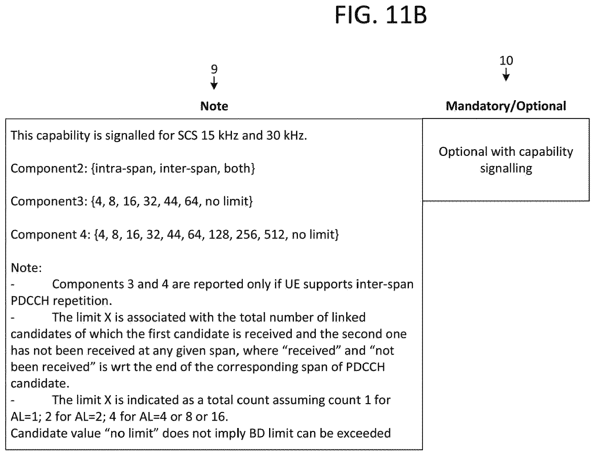

FIG. 9B is a diagram depicting additional table entries from the RAN1 UE features listing for index number 11-2f. FIG. 10A is a diagram depicting table entries from the RAN1 UE features listing for index number 11-2g. FIG. 10B is a diagram depicting additional table entries from the RAN1 UE features listing for index number 11-2g. FIG. 11A is a diagram depicting table entries from the RAN1 UE features listing for index number 23-2-1e. FIG. 11B is a diagram depicting additional table entries from the RAN1 UE features listing for index number 23-2-1e. It should be understood that select table entries from the RAN1 UE features listings are provided herein for convenience. One of skill in the art would understand the contents of the tables and how to find the information contained therein.

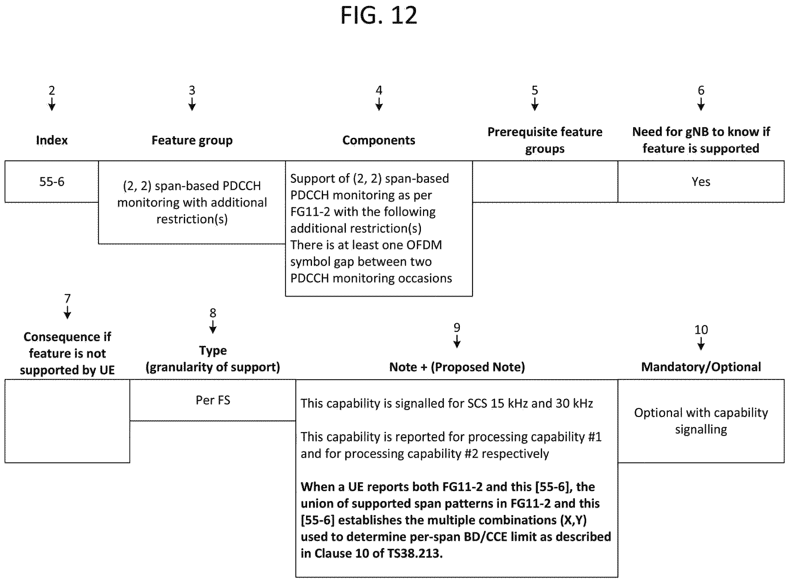

FIGS. 12-20 are 3GPP table entries from UE features listings for a set of capabilities associated with Release 18. Column 9 of FIGS. 12-20 include proposed notes (in bold), according to some embodiments of the present disclosure.

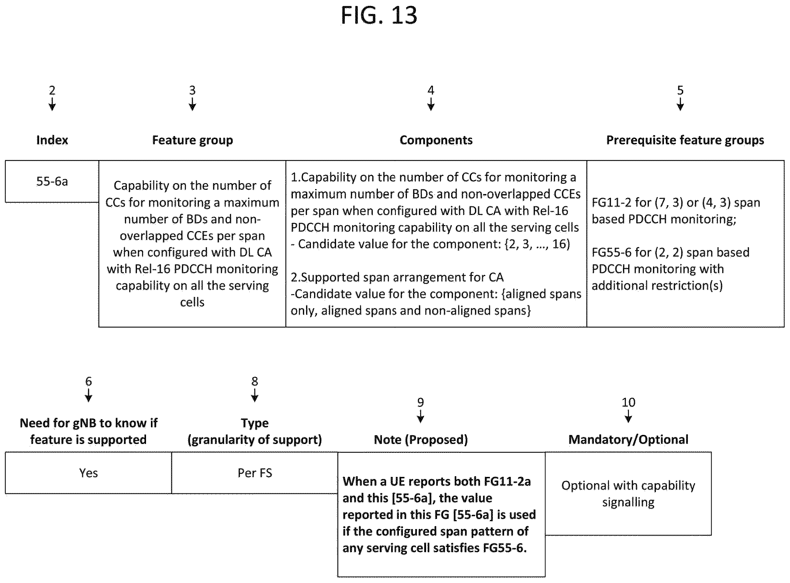

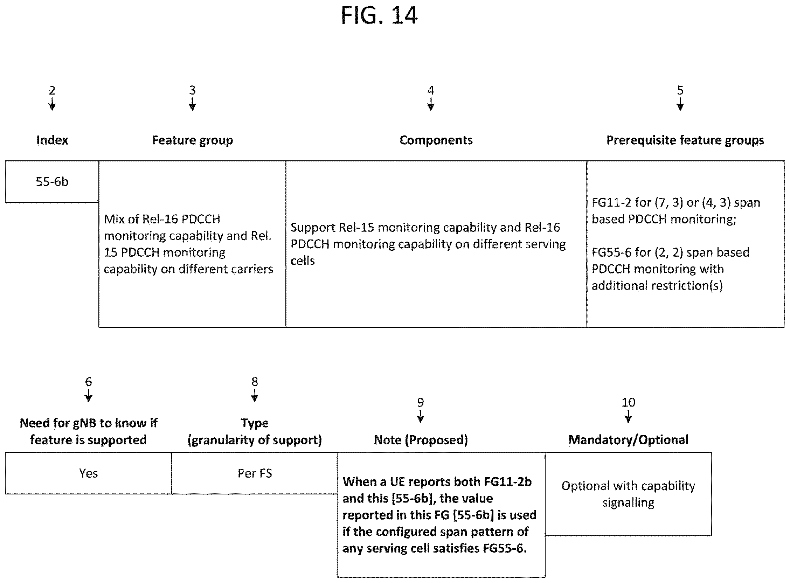

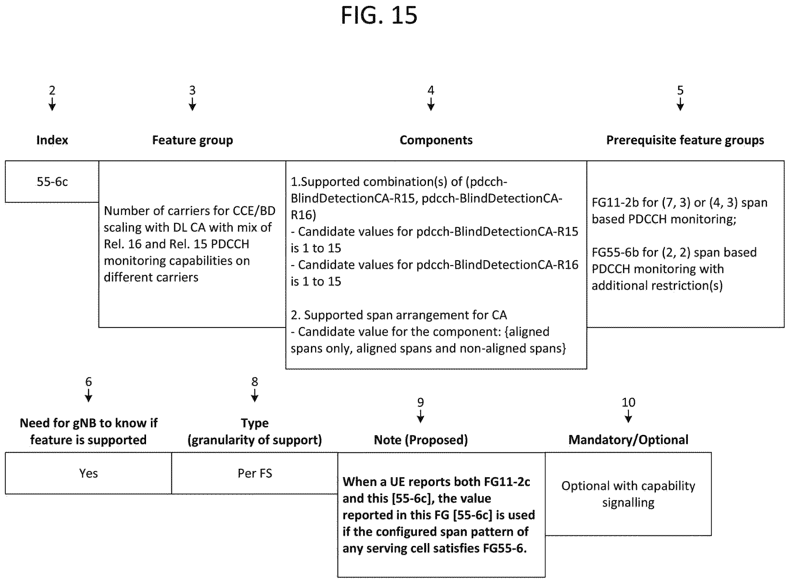

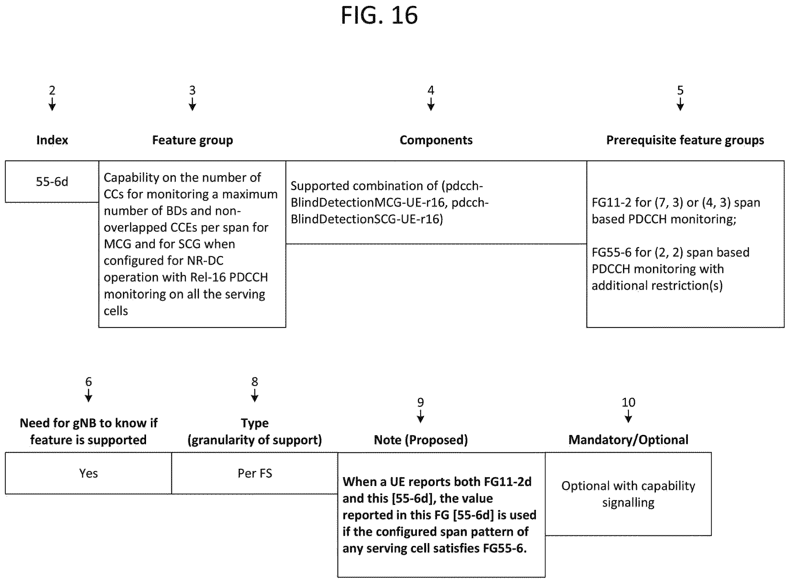

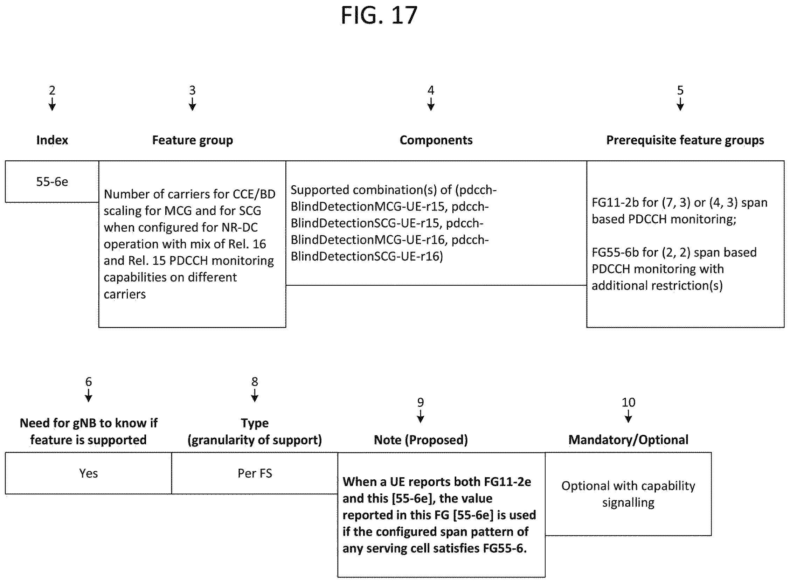

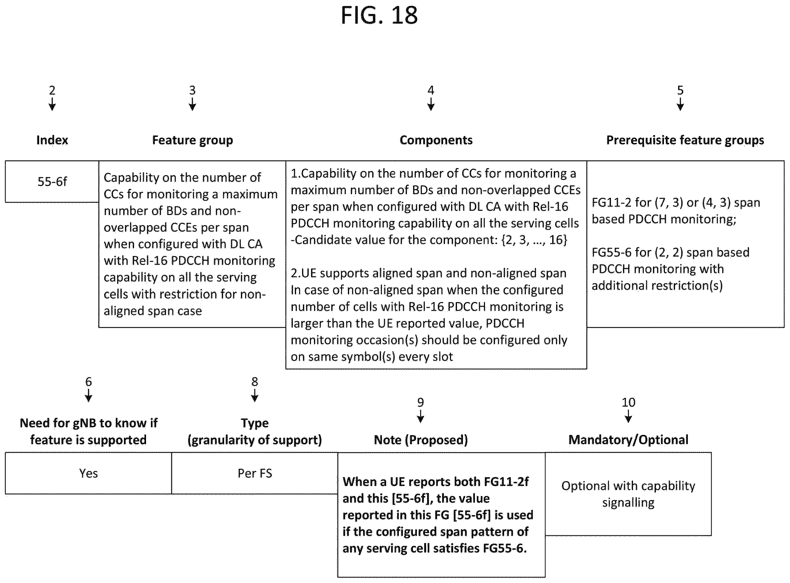

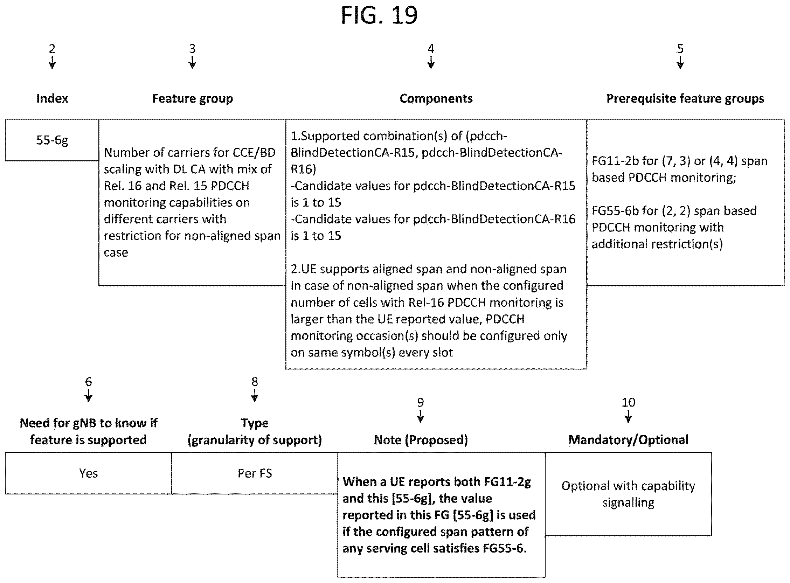

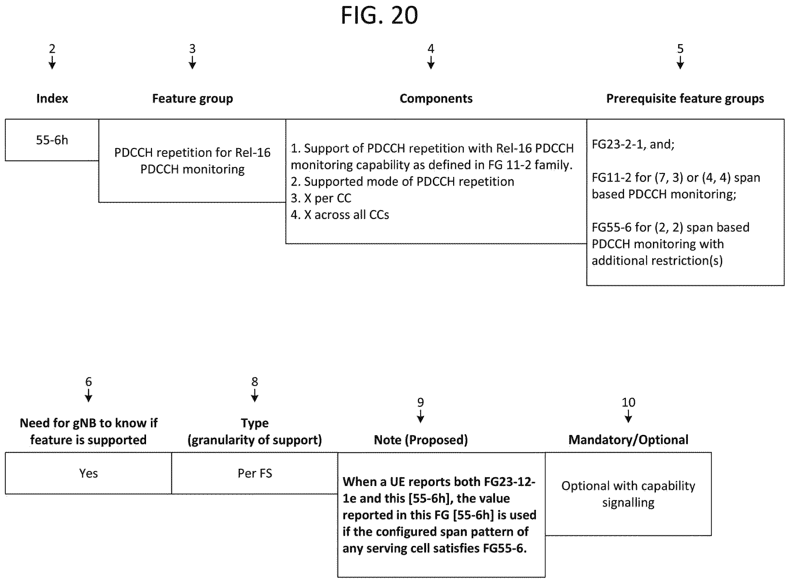

FIG. 12 is a diagram depicting table entries from the RAN1 UE features listing for index number 55-6, including a proposed note, according to some embodiments of the present disclosure. FIG. 13 is a diagram depicting additional table entries from the RAN1 UE features listing for index number 55-6a, including a proposed note, according to some embodiments of the present disclosure. FIG. 14 is a diagram depicting additional table entries from the RAN1 UE features listing for index number 55-6b, including a proposed note, according to some embodiments of the present disclosure. FIG. 15 is a diagram depicting additional table entries from the RAN1 UE features listing for index number 55-6c, including a proposed note, according to some embodiments of the present disclosure. FIG. 16 is a diagram depicting additional table entries from the RAN1 UE features listing for index number 55-6d, including a proposed note, according to some embodiments of the present disclosure. FIG. 17 is a diagram depicting additional table entries from the RAN1 UE features listing for index number 55-6e, including a proposed note, according to some embodiments of the present disclosure. FIG. 18 is a diagram depicting additional table entries from the RAN1 UE features listing for index number 55-6f, including a proposed note, according to some embodiments of the present disclosure. FIG. 19 is a diagram depicting additional table entries from the RAN1 UE features listing for index number 55-6g, including a proposed note, according to some embodiments of the present disclosure. FIG. 20 is a diagram depicting additional table entries from the RAN1 UE features listing for index number 55-6h, including a proposed note, according to some embodiments of the present disclosure.

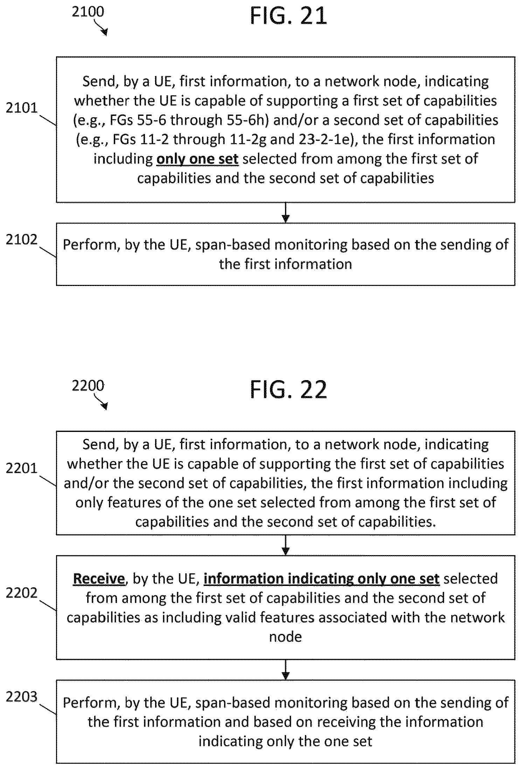

FIG. 21 is a flowchart depicting a method for PDCCH span-based monitoring based on a UE indicating support for only one set from a first set of capabilities and a second set of capabilities, according to some embodiments of the present disclosure.

FIG. 22 is a flowchart depicting a method for PDCCH span-based monitoring based on a UE receiving an explicit indication of which set of capabilities is valid, according to some embodiments of the present disclosure.

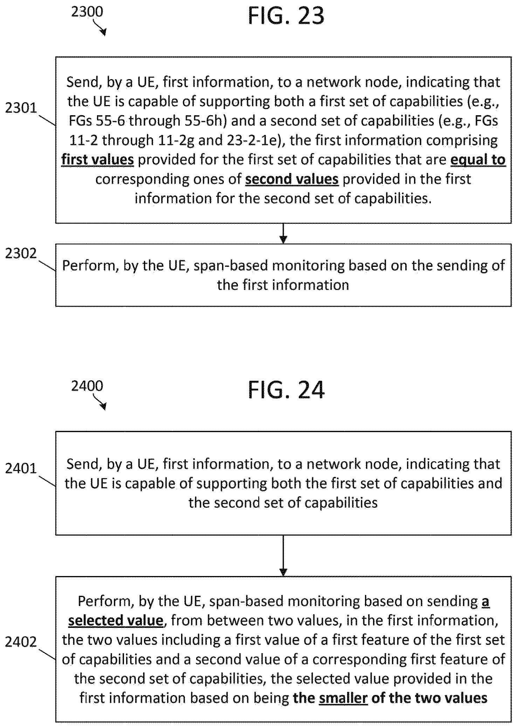

FIG. 23 is a flowchart depicting a method for PDCCH span-based monitoring based on a UE indicating same values for a first set of capabilities and a second set of capabilities, according to some embodiments of the present disclosure.

FIG. 24 is a flowchart depicting a method for PDCCH span-based monitoring based on selecting a selected value, from two sets, that is the smaller of two values, according to some embodiments of the present disclosure.

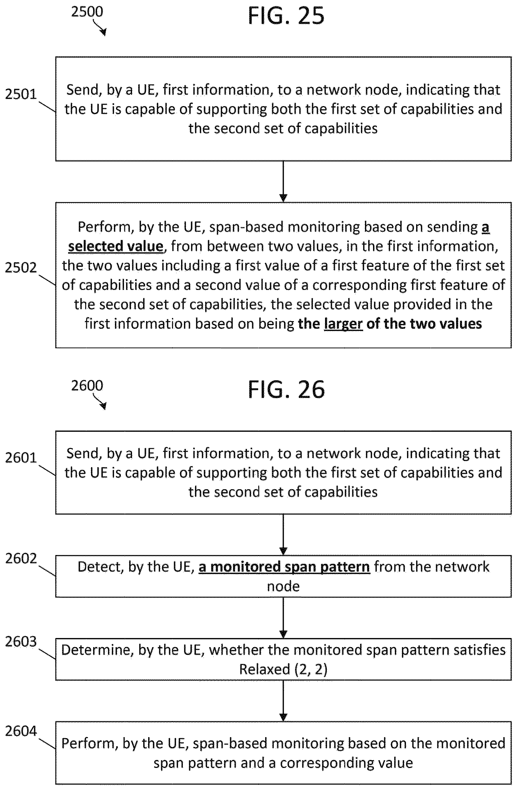

FIG. 25 is a flowchart depicting a method for PDCCH span-based monitoring based on selecting a selected value, from two sets, that is the larger of two values, according to some embodiments of the present disclosure.

FIG. 26 is a flowchart depicting a method for PDCCH span-based monitoring based on monitoring span patterns from a network node, according to some embodiments of the present disclosure.

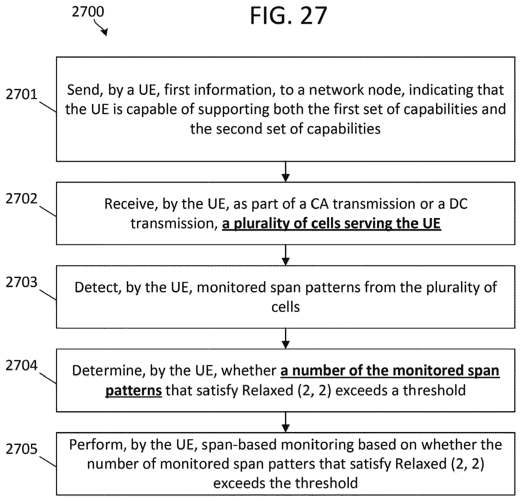

FIG. 27 is a flowchart depicting a method for PDCCH span-based monitoring based on a number of monitored span patterns exceeding a threshold, according to some embodiments of the present disclosure.

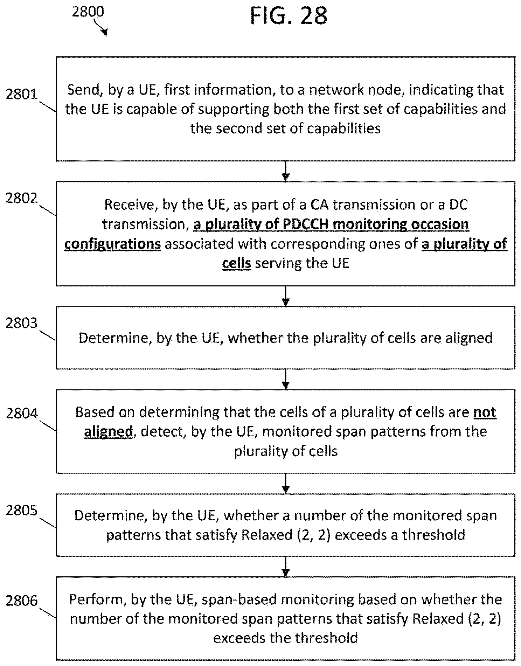

FIG. 28 is a flowchart depicting a method for PDCCH span-based monitoring based on determining that cells are not aligned, according to some embodiments of the present disclosure.

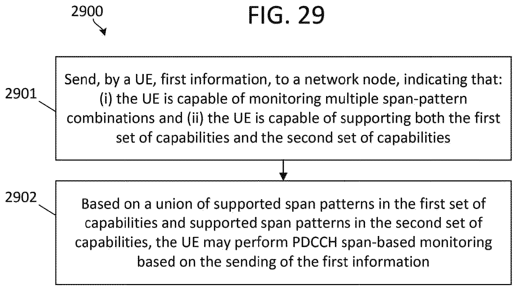

FIG. 29 is a flowchart depicting a method for PDCCH span-based monitoring based on a union of supported span patters from two sets of capabilities, according to some embodiments of the present disclosure.

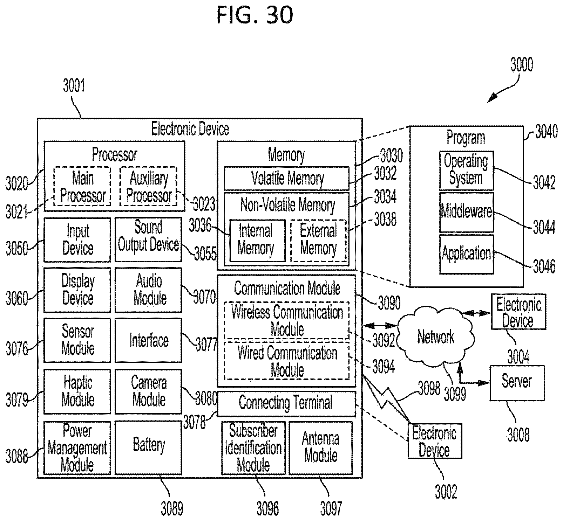

FIG. 30 is a block diagram of an electronic device in a network environment, according to some embodiments of the present disclosure.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the terms "or" and "and/or" include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The electronic or electric devices and/or any other relevant devices or components according to embodiments of the present disclosure described herein may be implemented utilizing any suitable hardware, firmware (e.g., an application-specific integrated circuit (ASIC)), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the spirit and scope of the example embodiments of the present disclosure.

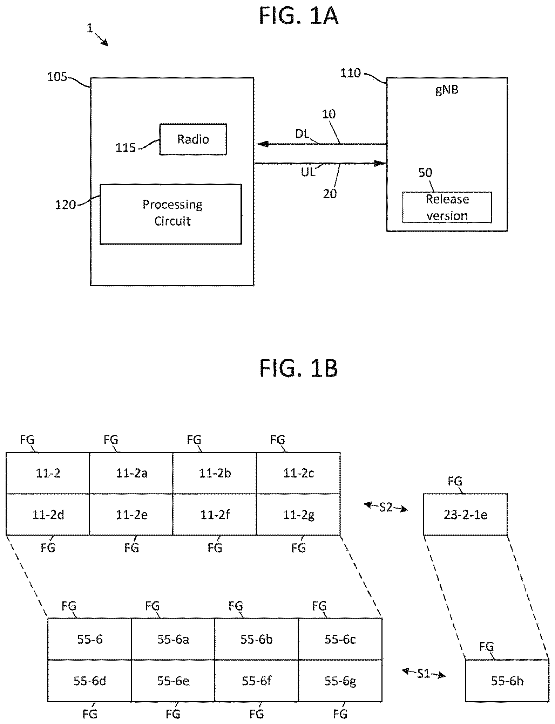

FIG. 1A is a block diagram depicting a system for sending information for performing PDCCH span-based monitoring, according to some embodiments of the present disclosure.

FIG. 1B is a block diagram depicting relationships between feature groups from Releases 16, 17, and 18, according to some embodiments of the present disclosure.

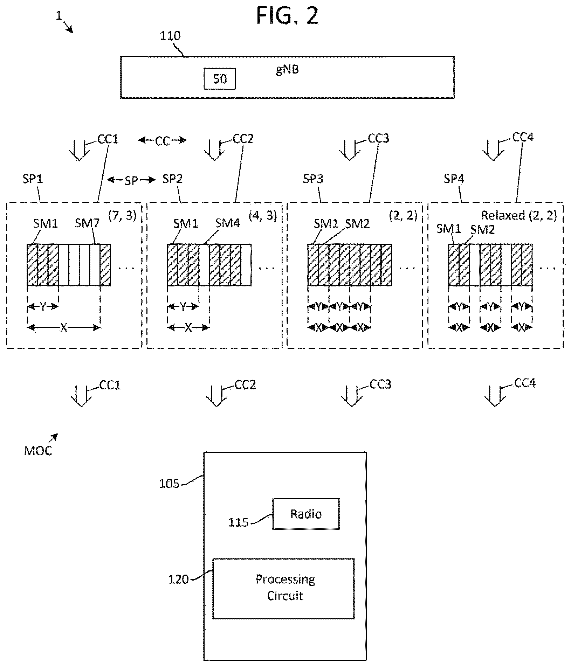

FIG. 2 is a block diagram depicting a transmission of component carriers in the system of FIG. 1A.

FIGS. 3A-11B are 3GPP table entries from UE features listings for a set of capabilities associated with Release 16 and Release 17.

FIG. 3A is a diagram depicting table entries from a Radio Access Network 1 (RAN1) UE features listing for index number 11-2. FIG. 3B is a diagram depicting additional table entries from the RAN1 UE features listing for index number 11-2. FIG. 4A is a diagram depicting table entries from the RAN1 UE features listing for index number 11-2a. FIG. 4B is a diagram depicting additional table entries from the RAN1 UE features listing for index number 1 1-2a. FIG. 5A is a diagram depicting table entries from the RAN1 UE features listing for index number 11-2b. FIG. 5B is a diagram depicting additional table entries from the RAN1 UE features listing for index number 11-2b. FIG. 6A is a diagram depicting table entries from the RAN1 UE features listing for index number 11-2c. FIG. 6B is a diagram depicting additional table entries from the RAN1 UE features listing for index number 11-2c. FIG. 7A is a diagram depicting table entries from the RAN1 UE features listing for index number 11-2d. FIG. 7B is a diagram depicting additional table entries from the RAN1 UE features listing for index number 11-2d. FIG. 8A is a diagram depicting table entries from the RAN1 UE features listing for index number 11-2e. FIG. 8B is a diagram depicting additional table entries from the RAN1 UE features listing for index number 11-2e. FIG. 8C is a diagram depicting additional table entries from the RAN1 UE features listing for index number 11-2e. FIG. 9A is a diagram depicting table entries from the RAN1 UE features listing for index number 11-2f. FIG. 9B is a diagram depicting additional table entries from the RAN1 UE features listing for index number 11-2f. FIG. 10A is a diagram depicting table entries from the RAN1 UE features listing for index number 11-2g. FIG. 10B is a diagram depicting additional table entries from the RAN1 UE features listing for index number 11-2g. FIG. 11A is a diagram depicting table entries from the RAN1 UE features listing for index number 23-2-1e. FIG. 11B is a diagram depicting additional table entries from the RAN1 UE features listing for index number 23-2-1e.

FIGS. 12-20 are 3GPP table entries from UE features listings for a set of capabilities associated with Release 18. Column 9 of FIGS. 12-20 include proposed notes (in bold), according to some embodiments of the present disclosure.

FIG. 12 is a diagram depicting table entries from the RAN1 UE features listing for index number 55-6, including a proposed note, according to some embodiments of the present disclosure. FIG. 13 is a diagram depicting additional table entries from the RAN1 UE features listing for index number 55-6a, including a proposed note, according to some embodiments of the present disclosure. FIG. 14 is a diagram depicting additional table entries from the RAN1 UE features listing for index number 55-6b, including a proposed note, according to some embodiments of the present disclosure. FIG. 15 is a diagram depicting additional table entries from the RAN1 UE features listing for index number 55-6c, including a proposed note, according to some embodiments of the present disclosure. FIG. 16 is a diagram depicting additional table entries from the RAN1 UE features listing for index number 55-6d, including a proposed note, according to some embodiments of the present disclosure. FIG. 17 is a diagram depicting additional table entries from the RAN1 UE features listing for index number 55-6e, including a proposed note, according to some embodiments of the present disclosure. FIG. 18 is a diagram depicting additional table entries from the RAN1 UE features listing for index number 55-6f, including a proposed note, according to some embodiments of the present disclosure. FIG. 19 is a diagram depicting additional table entries from the RAN1 UE features listing for index number 55-6g, including a proposed note, according to some embodiments of the present disclosure. FIG. 20 is a diagram depicting additional table entries from the RAN1 UE features listing for index number 55-6h, including a proposed note, according to some embodiments of the present disclosure.

As discussed above, modern communications equipment (e.g., mobile phones, vehicles, laptops, satellites, and the like), also known as user equipment (UE), may communicate with a network node (e.g., a base station) to receive data from a network associated with the network node and to transmit data to the network associated with the network node.

Referring to FIG. 1A, the system 1 may include a UE 105 and a network node 110 (e.g., a gNodeB, also referred to as a "base station"), in communication with each other. The network node 110 may be associated with a release version 50 associated with whether the network node 110 supports the capabilities associated with Releases 16, 17, and/or 18. The UE 105 may not know the release version 50 of the network node 110. The UE 105 may include a radio 115 and a means for processing. The means for processing may include a processing circuit 120, which may perform various methods disclosed herein (e.g., the methods depicted in FIGS. 21 through 29). The radio 115 may correspond to the communication module 3090 (see FIG. 30). The processing circuit 120 may correspond to the processor 3020 (see FIG. 30). The processing circuit 120 may receive, via the radio 115, transmissions from the network node 110, and the processing circuit 120 may transmit, via the radio 115, signals to the network node 110. A transmission from the network node 110 may be provided to the UE 105 via a downlink (DL) transmission 10. A transmission from the UE 105 may be provided to the network node 110 via an uplink (UL) transmission 20.

Aspects of some embodiments of the present disclosure are associated with capability signaling, by a UE, for performing PDCCH span-based monitoring.

UE capability signaling refers to a mechanism with which the UE 105 may inform the network node 110 of the capability of the UE 105 to perform certain features. For example, a UE may signal its ability to perform certain features via a given UE capability-signaling mechanism. The UE 105 may send capability information to perform capability signaling as part of a configuration process. For example, the network node 110 may configure resources (e.g., monitoring occasion configurations) for use by the UE 105 based on the capability information provided by the UE 105. The network node 110 may send capability requests to the UE 105 via a DL transmission 10. The UE 105 may send capability information to the network node 110 via an UL transmission 20. The monitoring occasion configurations may be provided by the network node 110 via a DL transmission 10.

The UE 105 may report its capabilities, in accordance with the 3GPP, using one or more of the following mechanisms. The UE 105 may report its capability to perform certain features in any scenario. For example, the UE may report its capability on a per-UE basis, which indicates that the UE 105 may perform the reported capability in any scenario (e.g., in any given frequency band, etc.). The UE 105 may report its capability to perform certain features in particular bands. For example, the UE may report its capability on a per-band basis, which indicates that the UE 105 may perform the reported capability in particular frequency bands. The UE may report its capability to perform certain features in particular band combinations for carrier aggregation (CA). For example, the UE may report its capability on a per-bandcombination (or per-BC) basis, which indicates that the UE 105 may perform the reported capability in particular frequency-band combinations. The UE may report its capability to perform certain features in one or more specific bands in a particular band combination for CA. For example, a mechanism referred to as feature sets may be used to allow for such flexibility in reporting, and the UE may report its capability on a per-featureSet (or per-FS) basis, which indicates that the UE 105 may perform the reported capability in one or more specific bands in a particular band combination. The UE may report its capability to perform certain features in one or more specific component carriers (CC) in a particular band combination for CA. For example, a mechanism referred to as feature sets per cc may be used to allow for such flexibility in reporting, and the UE may report its capability on a per-featureSet per cc (or per-FSPC) basis, which indicates that the UE 105 may perform the reported capability in one or more specific CC in a particular band combination. A band combination refers to a collection of bands to represent CA configuration (e.g., as described in the 3GPP specification 38.101).

The flexibility of a UE for declaring support of certain features (e.g., for sending capability information) may increase from a per-UE basis to a per-band basis to a per-bandcombination (or per-BC) basis to a per-featureSet (or per-FS) basis to a per-featureSet per cc (or per-FSPC) basis. For example, if feature A and feature Bare per-FSPC, a UE may have full flexibility of supporting only one of feature A and B in each CC. However, if those features are per-UE, then a UE could only support or only not support a given feature. A trade-off to added flexibility is greater overhead in signaling. Accordingly, a complexity of a given feature in UE implementation and an associated signaling overhead may be considered in determining how UE support of certain features may be declared (e.g., may be signaled).

In 3GPP, capability signaling may depend on each release of the 3GPP Specification. In some cases, a capability signaling designed for a certain functionality in one release may create a challenging situation for a UE. In that case, a more precise declaration of a feature support may be introduced in a later release. Similarly, a certain functionality that is a mandatory functionality for a UE to support may create a challenging situation for a UE when simultaneous operation of the mandatory functionality with another functionality is considered. In that case, a new capability signaling solution may be introduced to indicate support of the simultaneous operation in later releases. Aspects of embodiments of the present disclosure provide solutions for handling an interaction between a previous capability signaling (e.g., related to Releases 16 and 17) and a new capability signaling (e.g., related to Release 18) on the same or similar functionality.

As discussed above, such a situation occurs with PDCCH span-based monitoring in Releases 16, 17, and 18.

Release 16 provides for UE capabilities related to PDCCH span-based monitoring and includes FG 11-2 (see FIGS. 3A and 3B). Release 16 also provides for FGs 11-2a (see FIGS. 4A and 4B), 11-2b (see FIGS. 5A and 5B), 11-2c (see FIGS. 6A and 6B), 11-2d (see FIGS. 7A and 7B), 11-2e (see FIGS. 8A, 8B, and 8C), 11-2f (see FIGS. 9A and 9B), and 11-2g (see FIGS. 10A and 10B), which are supplementary capabilities for supporting the operation of FG 11-2. For example, column 4 in each of FIGS. 4A, 5A, 6A, 7A, 8A, 9A, and 10A indicates 11-2, or another supplementary capability (e.g., 11-2b), as a prerequisite feature group. Release 17 provides for repetition functionality, which is based on span-based monitoring, and includes FG23-2-1e (see FIGS. 11A and 11B), which is another supplementary capability for supporting the operation of FG 11-2. For example, column 5 in FIG. 11A indicates 11-2 as a prerequisite feature group.

FG 11-2 provides for a variety of span patterns for performing PDCCH span-based monitoring. For example, column 7 of FIG. 3B indicates span patterns (7, 3), (4, 3), and (2, 2). As discussed in further detail below, with respect to FIG. 2, different span patterns may provide a different balance between a scheduling latency for the system and a monitoring burden for the UE. For example, the capabilities of Release 16 and Release 17 may be associated with the span patterns (7, 3), (4, 3), and (2, 2) (e.g., the Original (2, 2)). Based on the Original (2, 2), the UE may experience a monitoring burden that is difficult (e.g., too difficult) for some UEs.

In Release 17, PDCCH repetition functionality is introduced, and UE capabilities for supporting PDCCH repetition together with Release 16 span-based monitoring are introduced (see FIGS. 11A and 11B).

A "span" is defined as follows in 3GPP 38.213.

"A UE can indicate a capability to monitor PDCCH according to one or more of the combinations (X, Y) = (2, 2), (4, 3), and (7, 3) per SCS [subcarrier spacing] configuration of $\mu$=0 and $\mu$=1 [wherein $\mu$ refers to subcarrier spacing, and a UE can declare different subcarrier spacings for a span pattern]. A span is a number of consecutive symbols in a slot where the UE is configured to monitor PDCCH. Each PDCCH monitoring occasion is within one span. If a UE monitors PDCCH on a cell according to combination (X, Y), the UE supports PDCCH monitoring occasions in any symbol of a slot with minimum time separation of X symbols between the first symbol of two consecutive spans, including across slots. A span starts at a first symbol where a PDCCH monitoring occasion starts and ends at a last symbol where a PDCCH monitoring occasion ends, where the number of symbols of the span is up to Y."

As described in 11-2, a set with one or more elements of span patterns (2, 2), (4, 3), and (7, 3) may be reported for each subcarrier spacing (SCS) and processing type. In Release 18, however, supporting (2, 2) is determined to be too difficult for some UEs, and the Relaxed (2, 2) is introduced with corresponding UE capabilities (see FIG. 12). For example, column 4 of FIG. 12 indicates support of (2, 2) span-based PDCCH monitoring as per FG 11-2 with the additional restriction that there is at least one orthogonal frequency-division multiplexing (OFDM) symbol gap between two PDCCH monitoring occasions.

That is, release 18 provides for a modified (e.g., the Relaxed (2, 2)) version of the Original (2, 2), and includes FG 55-6 (see FIG. 12). Release 18 also provides for FGs 55-6a (see FIG. 13), 55-6b (see FIG. 14), 55-6c (see FIG. 15), 55-6d (see FIG. 16), 55-6e (see FIG. 17), 55-6f (see FIG. 18), 55-6g (see FIG. 19), and 55-6h (see FIG. 20), which are supplementary capabilities for supporting the operation of FG 55-6. Each of FGs 55-6, 55-6a, 55-6b, 55-6c, 55-6d, 55-6e, 55-6f, 55-6g, and 55-6h were created to respectively mirror each of FGs 11-2, 11-2a, 11-2b, 11-2c, 11-2d, 11-2e, 11-2f, 11-2g, and 23-2-1e. That is, there is a one-to-one correspondence between each of FG 11-2a through 11-2g, 23-12-1e and each of 55-6a through 55-6h. For example, FG 55-6a mirrors FG 11-2a, FG 55-6g mirrors FG 11-2g, and FG 55-6h mirrors FG 23-2-1e.

For example, and referring to FIG. 1B, the feature groups FG associated with Release 18 (e.g., FG 55-6 through 55-6h) may be considered to be within a first set of capabilities S1 and the feature groups FG associated with Release 16 and Release 17 (e.g., FG 11-2 through 11-2g and FG 23-2-1e) may be considered to be within a second set of capabilities S2. As can be seen by comparing the corresponding tables of FIGS. 4A to 20, FG 55-6a mirrors FG 11-2a, FG 55-6b mirrors FG 11-2b, FG 55-6c mirrors FG 11-2c, FG 55-6d mirrors FG 11-2d, FG 55-6e mirrors FG 11-2e, FG 55-6f mirrors FG 11-2f, FG 55-6g mirrors FG 11-2g, and FG 55-6h mirrors FG 23-2-1e.

As discussed above, the Relaxed (2, 2) may lessen the monitoring burden for UEs and make it easier for some UEs to perform PDCCH span-based monitoring that is similar to, but relaxed from, the Original (2, 2) span pattern.

Referring to FIG. 2, to describe differences between the Original (2, 2) and the Relaxed (2, 2), an example is provided, wherein the network node 110 configures a plurality of PDCCH monitoring occasion configurations MOC associated with corresponding ones of a plurality of cells (e.g., a plurality of component carriers CC) serving the UE 105. For example, a span pattern SP1 associated with a component carrier CC1 may include the span pattern (7, 3), wherein a span gap X is equal to seven (e.g., seven symbols) and a span Y (e.g., a span length Y) is equal to three (e.g., three symbols). The span gap X of component carrier CC1 begins with a first symbol SM1 (e.g., a first OFDM symbol) and ends with a seventh symbol SM7. The span pattern (7, 3) may repeat such that a search space (e.g., a monitoring occasion) corresponds to the span Y. For example, the UE may perform PDCCH span-based monitoring based on the span pattern (7, 3) by monitoring for PDCCH information from the network node 110 during the span Y and by not monitoring (e.g., to perform other tasks, such as receiving a physical downlink shared channel (PDSCH)) between spans Y. The span pattern (7, 3) may result in a relatively greater scheduling latency than the span pattern (4, 3) because the span pattern (7, 3) causes the network node to wait longer between spans Y to send the UE 105 information. For example, a span pattern SP2 associated with a component carrier CC2 may include the span pattern (4, 3), wherein a span gap X is equal to four and a span Y is equal to three. The network node 110 waits for a shorter duration of time and the UE 105 monitors for a longer duration of time based on the span pattern (4, 3).

A span pattern SP3 associated with a component carrier CC3 may include the span pattern (2, 2) (e.g., the Original (2, 2)), wherein a span gap X is equal to two and a span Y is equal to two. The network node 110 does not wait for any duration of time to transmit information to the UE 105, and the UE 105 continually monitors based on the span pattern (2, 2). Because the UE 105 continually monitors based on the Original (2, 2), the Original (2, 2) may be too difficult for some UEs. A span pattern SP4 associated with a component carrier CC4 may include the Relaxed (2, 2), wherein a span gap X is equal to two and a span Y is equal to two and one or more additional symbols are provided between spans (e.g., between two PDCCH monitoring occasions) to make it easier for UEs to perform PDCCH span-based monitoring that is similar to the Original (2, 2).

Because FG 55-6 and its supplementary capabilities are associated with the Relaxed (2, 2) and the FG 11-2 and its supplementary capabilities are associated with the Original (2, 2), the mirroring of FGs 55-6, 55-6a, 55-6b, 55-6c, 55-6d, 55-6e, 55-6f, 55-6g, and 55-6h with corresponding ones of FGs 11-2, 11-2a, 11-2b, 11-2c, 11-2d, 11-2e, 11-2f, 11-2g, and 23-2-1e enables a UE to send information indicating support for the capabilities of Release 18 (e.g., FG 55-6 and its supplementary capabilities) without also indicating support for the capabilities of Releases 16 and 17 (e.g., FG 11-2 and its supplementary capabilities).

However, ambiguities (e.g., uncertainties) may arise when a UE that is not capable of supporting the Original (2, 2) supports other span patterns such as (4, 3) and (7, 3) from FG 11-2 while also indicating support of one or more of the supplementary capabilities of FG 11-2 (e.g., one or more of 11-2a, 11-2b, 11-2c, 11-2d, 11-2e, 11-2f, 11-2g, and 23-2-1e) and support of the Relaxed (2, 2) in FG 55-6. The ambiguities may prevent the system 1 from operating properly. For example, the ambiguities may cause the system 1 to drop calls.

To overcome these issues, systems and methods are described herein for communicating information for PDCCH span-based monitoring when a UE is capable of supporting both: (i) features from a first set of capabilities, associated with Release 18, including one or more of FGs 55-6, 55-6a, 55-6b, 55-6c, 55-6d, 55-6e, 55-6f, 55-6g, and 55-6h and (ii) features from a second set of capabilities, associated with Releases 16 and 17, including one or more of FGs 11-2, 11-2a, 11-2b, 11-2c, 11-2d, 11-2e, 11-2f, 11-2g, and 23-2-1e.

FIG. 21 is a flowchart depicting a method for PDCCH span-based monitoring based on a UE indicating support for only one set from a first set of capabilities and a second set of capabilities, according to some embodiments of the present disclosure.

Introducing FGs 55-6a through 55-6h does not cause any issue if the UE does not support FG 11-2 and its supplementary capabilities (FG 11-2a through 23-12-1e). Accordingly, one solution for removing ambiguity is to have the UE comply with a rule that it may not indicate support of FG 11-2 and some or all of the supplementary capabilities FG 11-2a through 23-12-1e corresponding to the indicated one(s) among FGs 55-6a through 55-6h if the UE indicates support of FG 55-6 and any of the supplementary capabilities FG 55-6a through 55-6h.

For example, and referring to FIG. 21, in some embodiments, a UE that is capable of supporting a first set of capabilities (e.g., including the Release 18 capabilities) and a second set of capabilities (e.g., including the Release 16 and 17 capabilities) may perform a method 2100 comprising one or more of the following operations. The UE may send first information, to a network node, indicating whether the UE is capable of supporting the first set of capabilities and/or the second set of capabilities (operation 2101). The UE may perform span based monitoring based on the sending of the first information (operation 2102). The first information may comprise only one set selected from among the first set of capabilities and the second set of capabilities, such that the UE does not send information indicating the UE is capable of supporting features (e.g., mirrored features) from both the first set of capabilities and the second set of capabilities.

However, since the span pattern (2, 2) (the Original (2, 2)) is the only span pattern that is relaxed in 55-6, the UE may not have an issue with supporting span patterns (4, 3) and (7, 3) under FG 11-2. When the UE supports FG 11-2 as well as all the supplementary capabilities FGs 11-2a through 11-2g and 23-12-1e, and if the UE also supports FG 55-6 and the supplementary capabilities FG 55-6a through 55-6h, each of FGs 11-2a through 11-2g and 23-12-1e and each of FGs 55-6a through 55-6h creates two values (e.g., two versions) of the capability, which may be mismatched. In this case, because the UE does not know the release version of the network node to which the UE is connected, and the UE does not know if the network node correctly understands FG 55-6 and the supplementary capabilities FG 55-6a through 55-6h, the UE may not know which of the supplementary capabilities FG 11-2a through 23-12-1e or the supplementary capabilities 55-6a through 55-6h is valid for the network node to which the UE is connected. Accordingly, such ambiguity may be removed for improved (e.g., for proper) operation based on one of the following approaches.

FIG. 22 is a flowchart depicting a method for PDCCH span-based monitoring based on a UE receiving an explicit indication of which set of capabilities is valid, according to some embodiments of the present disclosure.

In some embodiments, an explicit signaling may be provided from the network node to the UE to indicate which set of capabilities between FGs 11-2a through 23-12-1e and FGs 55-6a through 55-6h is valid for the network node. In some embodiments, such a message may be provided via radio resource control (RRC).

For example, and referring to FIG. 22, in some embodiments, a UE that is capable of supporting a first set of capabilities (e.g., including the Release 18 capabilities) and a second set of capabilities (e.g., including the Release 16 and 17 capabilities) may perform a method 2200 comprising one or more of the following operations. The UE may send first information, to a network node, indicating whether the UE is capable of supporting the first set of capabilities and/or the second set of capabilities (operation 2201). The UE may receive information indicating only one set selected from among the first set of capabilities and the second set of capabilities as including valid features associated with the network node (operation 2202). The UE may perform span based monitoring based on the sending of the first information and based on receiving the information indicating only the one set (operation 2203). The first information may include only features of the one set selected from among the first set of capabilities and the second set of capabilities.

FIG. 23 is a flowchart depicting a method for PDCCH span-based monitoring based on a UE indicating same values for a first set of capabilities and a second set of capabilities, according to some embodiments of the present disclosure.

In some embodiments, if a UE indicates both 11-2x (e.g., FGs 11-2a through 11-2g) and 55-6x (e.g., FGs 55-6a through 55-6g) or both FG 23-12-1e and FG 55-6h, then the UE may indicate the same values for 11-2x and 55-6x as well as for 23-12-1e and 55-6h. If the UE indicates only one of 11-2x and 55-6x or only one of 23-12-1e and 55-6h, then the UE may only indicate 11-2x or 23-12-1e. This method may remove ambiguity without explicating (e.g., without developing detailed) signaling.

For example, and referring to FIG. 23, in some embodiments, a UE that is capable of supporting a first set of capabilities (e.g., including the Release 18 capabilities) and a second set of capabilities (e.g., including the Release 16 and 17 capabilities) may perform a method 2300 comprising one or more of the following operations. The UE may send first information, to a network node, indicating that the UE is capable of supporting both the first set of capabilities and the second set of capabilities (operation 2301). The UE may perform span based monitoring based on the sending of the first information (operation 2302). The first information may include first values provided for the first set of capabilities that are equal to corresponding ones of second values provided in the first information for the second set of capabilities.

FIG. 24 is a flowchart depicting a method for PDCCH span-based monitoring based on selecting a selected value, from two sets, that is the smaller of two values, according to some embodiments of the present disclosure.

In some embodiments, to provide for a solution with improved signaling overhead and fewer restrictions, the UE may perform PDCCH span-based monitoring based on sending first information indicating a smaller value between each of FGs 11-2a through 23-12-1e and each of FGs 55-6a through 55-6h. This approach may provide for a relatively simple UE implementation.

For example, and referring to FIG. 24, in some embodiments, a UE that is capable of supporting a first set of capabilities (e.g., including the Release 18 capabilities) and a second set of capabilities (e.g., including the Release 16 and 17 capabilities) may perform a method 2400 comprising one or more of the following operations. The UE may send first information, to a network node, indicating that the UE is capable of supporting both the first set of capabilities and the second set of capabilities (operation 2401). The UE may perform span-based monitoring based on sending a selected value, from between two values, in the first information (operation 2402). The two values may include a first value of a first feature of the first set of capabilities (e.g., the value 3 from the first component in column 4 of FIG. 13 corresponding to FG 55-6a) and a second value of a corresponding first feature of the second set of capabilities (e.g., the value 16 from the first component in column 3 of FIG. 4A corresponding to FG 11-2a). The selected value provided in the first information may be the smaller of the two values (e.g., the value 3).

FIG. 25 is a flowchart depicting a method for PDCCH span-based monitoring based on selecting a selected value, from two sets, that is the larger of two values, according to some embodiments of the present disclosure.

In some embodiments, to provide for a solution with improved signaling overhead and fewer restrictions, the UE may perform PDCCH span-based monitoring based on sending first information indicating a larger value between each of FGs 11-2a through 23-12-1e and each of FGs 55-6a through 55-6h. This approach may provide for a relatively flexible system operation.

For example, and referring to FIG. 25, in some embodiments, a UE that is capable of supporting a first set of capabilities (e.g., including the Release 18 capabilities) and a second set of capabilities (e.g., including the Release 16 and 17 capabilities) may perform a method 2500 comprising one or more of the following operations. The UE may send first information, to a network node, indicating whether the UE is capable of supporting both the first set of capabilities and the second set of capabilities (operation 2501). The UE may perform span

based monitoring based on sending a selected value, from between two values, in the first information (operation 2502). The two values may include a first value of a first feature of the first set of capabilities (e.g., the value 3 from the first component in column 4 of FIG. 13 corresponding to FG 55-6a) and a second value of a corresponding first feature of the second set of capabilities (e.g., the value 16 from the first component in column 3 of FIG. 4A corresponding to FG 11-2a). The selected value provided in the first information may be the larger of the two values (e.g., the value 16).

FIG. 26 is a flowchart depicting a method for PDCCH span-based monitoring based on monitoring span patterns from a network node, according to some embodiments of the present disclosure.

In some embodiments, to provide for a solution with improved signaling overhead and fewer restrictions, the UE may not indicate (e.g., the UE may comply with a rule not allowing the UE to indicate) support of span pattern (2, 2) in FG 11-2 if it also indicates support of FG 55-6. When the PDCCH monitoring occasion configuration of the network node satisfies the Relaxed (2, 2), the UE may consider the values in FG 55-6a through 55-6h to be valid. Otherwise, if the network node's PDCCH monitoring occasion configuration does not satisfy the Relaxed (2, 2), the UE may consider the values in FG 11-2a through 23-2-1e to be valid.

For example, and referring to FIG. 26, in some embodiments, a UE that is capable of supporting a first set of capabilities (e.g., including the Release 18 capabilities) and a second set of capabilities (e.g., including the Release 16 and 17 capabilities) may perform a method 2600 comprising one or more of the following operations. The UE may send first information, to a network node, indicating that the UE is capable of supporting both the first set of capabilities and the second set of capabilities (operation 2601). The UE may determine (e.g., may detect) a monitored span pattern from the network node (operation 2602). As used herein, a "monitored span pattern" refers to a span pattern that is received by a UE for the UE to determine a type of pattern associated with the monitored span pattern. For example, the UE may receive a configured span pattern (e.g., the monitored span pattern) from a serving cell. The UE may determine whether the monitored span pattern satisfies (e.g., whether the monitored span pattern is) the Relaxed (2, 2) (operation 2603). For example, the UE may determine that the monitored span pattern does satisfy the Relaxed (2, 2) or that the monitored span pattern does not satisfy the Relaxed (2, 2) (e.g., satisfies span patterns (4, 3) or (7, 3)). The UE may perform PDCCH span-based monitoring based on the monitored span pattern and a corresponding value (operation 2604).

For example, based on determining whether the monitored span pattern satisfies the Relaxed (2, 2), the UE may perform PDCCH span-based monitoring based on a corresponding value from either the first set S1 (e.g., FG 55-6x) or based on a value from the second set S2 (e.g., FG 11-2x). For example, the value from the first set S1 may include the value 3 from the first component in column 4 of FIG. 13 corresponding to FG 55-6a. The value from the second set S2 may include the value 16 from the first component in column 3 of FIG. 4A corresponding to FG 11-2a.

In other words, based on (e.g., in response to) determining that the monitored span pattern satisfies the Relaxed (2, 2), the UE may perform PDCCH span-based monitoring based on a corresponding value from the first set S1 (e.g., a value from feature groups 55-6, 55-6a, 55-6b, 55-6c, 55-6d, 55-6e, 55-6f, 55-6g, or 55-6h). And based on (e.g., in response to) determining that the monitored span pattern satisfies a span pattern that is not the Relaxed (2, 2) (e.g., a span pattern that satisfies (4, 3) or (7, 3)), the UE may perform PDCCH span-based monitoring based on a corresponding value from the second set S2 (e.g., a value from feature groups 11-2, 11-2a, 11-2b, 11-2c, 11-2d, 11-2e, 11-2f, 11-2g, or 23-2-1e).

FIG. 27 is a flowchart depicting a method for PDCCH span-based monitoring based on a number of monitored span patterns exceeding a threshold, according to some embodiments of the present disclosure.

When a UE supports multiple cells in CA or dual connectivity (DC), some cells (e.g., some component carriers CC) may have a PDCCH monitoring occasion configuration satisfying the Relaxed (2, 2) and other cells may have a PDCCH monitoring occasion configuration satisfying (4,3) or (7,3). In this case, a common method (e.g., a common restriction or condition) may be implemented for all cells serving the UE. For example, FGs 55-6a through 55-6h may be considered valid (e.g., may be used for PDCCH span-based monitoring) if a number (e.g., a predetermined number) of cells have a PDCCH monitoring occasion configuration satisfying the Relaxed (2,2). In some embodiments, the number may be 1, which would correspond to "if any of cells" (e.g., if any of the cells satisfy the Relaxed (2, 2)). This feature corresponds to the following language adopted in 3GPP Specification (e.g., 5G spec) 38.306 for *pdcch-MonitoringMixed-r18:* "When a UE reports both *pdcch-MonitoringMixed rl6* and this capability, the value reported in this capability is used if the configured span pattern of any serving cell satisfies *pdcch-MonitoringSpan2-2-r18.*" This feature also corresponds to the proposed language in bold in column 9 of FIGS. 13 through 20: "When a UE reports both FG11-2a and this [55-6x], the value reported in this FG [55-6x] is used if the configured span pattern of any serving cell satisfies FG55-6."

Another example would be 'if all cells' (e.g., if all cells satisfy the Relaxed (2, 2).

A smaller number would promote the usage of the values in FGs 55-6a through 55-6h. For example, a smaller number may make it more likely than not that the capabilities of Release 18 would be used. A larger number would promote the usage of the values in FGs 11-2a through 23-2-1e. For example, a larger number may make it more likely than not that the capabilities of Releases 16 and 17 would be used. In some embodiments, a smaller number may be chosen based on the view that the Original (2,2) is challenging to implement. In some embodiments, a larger number may be chosen to promote the usage of FGs 11-2a through 23-2-1e, which are more widely available features (e.g., functionalities) in earlier releases of the 3GPP Specification.

For example, and referring to FIG. 27, in some embodiments, a UE that is capable of supporting a first set of capabilities (e.g., including the Release 18 capabilities) and a second set of capabilities (e.g., including the Release 16 and 17 capabilities) may perform a method 2700 comprising one or more of the following operations. The UE may send first information, to a network node, indicating that the UE is capable of supporting both the first set of capabilities and the second set of capabilities (operation 2701). The UE may receive, as part of a CA transmission or a DC transmission, a plurality of PDCCH monitoring occasion configurations associated with corresponding ones of a plurality of cells serving the UE (operation 2702). The UE may determine (e.g., may detect) monitored span patterns from the plurality of cells (operation 2703). The UE may determine whether a number of the monitored span patterns that satisfy the Relaxed (2, 2) satisfies (e.g., exceeds) a threshold (operation 2704). The UE may perform PDCCH span-based monitoring based on whether the number of the monitored span patterns that satisfy the Relaxed (2, 2) exceeds the threshold (operation 2705). In some embodiments, the threshold may be a number that is more likely than not to trigger a usage of the Release 18 capabilities. For example, the threshold may correspond to the number 1 (e.g., to use the Release 18 capabilities if the monitored span pattern from one cell satisfies the Relaxed (2, 2)). In some embodiments, the threshold may be a number that is more likely than not to trigger a usage of the Release 16 and 17 capabilities. For example, the threshold may correspond to all of the cells (e.g., may correspond to a total number of cells serving the UE, such that the Release 18 capabilities are used if the monitored span pattern from all of the cells satisfies the Relaxed (2, 2)).

FIG. 28 is a flowchart depicting a method for PDCCH span-based monitoring based on determining that cells are not aligned, according to some embodiments of the present disclosure.

Span patterns of a PDCCH monitoring occasion can be "aligned" as described in component 2 of 55-6a (see column 4 of FIG. 13). As mentioned above, in some situations, only some cells may satisfy the Relaxed (2,2), but this issue may not happen (e.g., may not occur) when the span patterns of all cells are aligned. For example, when all cells are aligned, all cells may either satisfy or not satisfy the Relaxed (2, 2). In this case, the restriction (e.g., the condition) described above with respect to the method 2700 may only be applied when the span patterns of cells are not aligned (e.g., when the span patterns are "non-aligned").

For example, and referring to FIG. 28, in some embodiments, a UE that is capable of supporting a first set of capabilities (e.g., including the Release 18 capabilities) and a second set of capabilities (e.g., including the Release 16 and 17 capabilities) may perform a method 2800 comprising one or more of the following operations. The UE may send first information, to a network node, indicating that the UE is capable of supporting both the first set of capabilities and the second set of capabilities (operation 2801). The UE may receive, as part of a CA transmission or a DC transmission, a plurality of PDCCH monitoring occasion configurations associated with corresponding ones of a plurality of cells serving the UE (operation 2802). The UE may determine whether the plurality of cells serving the UE are aligned or not aligned (e.g., unaligned) (operation 2803). Based on determining that the cells of the plurality of cells are not aligned, the UE may determine (e.g., may detect) monitored span patterns from the plurality of cells (operation 2804). The UE may determine whether a number of the monitored span patterns that satisfy the Relaxed (2, 2) exceeds a threshold (operation 2805). The UE may perform PDCCH span-based monitoring based on whether the number of the monitored span patterns that satisfy the Relaxed (2, 2) exceeds the threshold (operation 2806).

A reporting granularity for each of FGs 11-2a through 11-2g, except for FG 11-2b, is per-BC, while a reporting granularity for each of FGs 55-6a through 55-6g is per-FS. Per-BC here (e.g., for FGs 55-6a through 55-6g) may be more natural because the components in FGs 11-2a through 11-2g may affect all serving cells together. With per-FS granularity for each of FGs 55-6a through 55-6h, there may be ambiguity if a UE signals different values for different bands in a BC. To avoid this ambiguity, in some embodiments, the UE may indicate the same value for all serving cells. For example, the UE may indicate the same value for the same position in all *FeatureSetsPerBands* in the indicated *FeatureSetCombination*. In some embodiments, the UE may be allowed to indicate a value in one or some of *FeatureSetsPerBands* while ensuring the same value for all the reported ones (e.g., for all the reported values). For example, the UE may indicate the same value, or nothing (e.g., no value), for the same position in all *FeatureSetsPerBands* in the indicated *FeatureSetCombination.* The issue described here may occur because a granularity (e.g., a reporting granularity) for each of FGs 55-6a through 55-6h is too fine. Accordingly, in some embodiments, the issue may be resolved by making the granularity per-BC, instead of per-FS. In other words, because FGs 55-6a through 55-6h are created as counterparts of (e.g., because FGs 55-6a through 55-6h mirror) FGs 11-2a through 11-2g (and 23-2-1e) from an earlier release, the granularity of these new capabilities (e.g., FGs 55-6a through 55-6h) may be modified to have the same granularity as their earlier release counterparts (e.g., FGs 11-2a through 11-2g and 23-2-1e).

FIG. 29 is a flowchart depicting a method for PDCCH span-based monitoring based on a union of supported span patters from two sets of capabilities, according to some embodiments of the present disclosure.

As discussed above, a set with one or more elements of (2, 2), (4, 3), and (7, 3) may be reported for each SCS and processing type in FG 11-2. It may be advantageous to define (e.g., to more clearly define) this set notion (e.g., set notation) in the 3GPP Specification because the set (e.g., the multiple (X, Y) combinations discussed in the quoted portion of 3GPP Specification 38.213 below) may be used to determine the maximum number of PDCCH processing as described in 3GPP Specification 38.213.

The relevant portion of 3GPP Specification 38.213 indicates the following.

"If a UE indicates a capability to monitor PDCCH according to multiple (X, Y) combinations and a configuration of search space sets to the UE for PDCCH monitoring on a cell results to a separation of every two consecutive PDCCH monitoring spans that is equal to or larger than the value of *X* for one or more of the multiple combinations (X, Y), the UE monitors PDCCH on the cell according to the combination (X, Y), from the one or more combinations (X, Y), that is associated with the largest maximum number of $M_{\mathrm{PDCCH}}^{max,(X,Y),\mu}$ and $C_{\mathrm{PDCCH}}^{max,(X,Y),\mu}$ defined in Table 10.1-2A and Table 10.1-3A [of 3GPP Specification 38.213]. The UE expects to monitor PDCCH according to the same combination (X, Y) in every slot on the active DL BWP [bandwidth part] of a cell." $M_{\mathrm{PDCCH}}^{max,(X,Y),\mu}$ refers to a maximum number of blind decodings (BDs). $C_{\mathrm{PDCCH}}^{max,(X,Y),\mu}$ refers to a maximum number of non-overlapped control channel elements (CCEs) per span. Each span pattern may have a different value for $M_{\mathrm{PDCCH}}^{max,(X,Y),\mu}$. Each span pattern may have a different value for $C_{\mathrm{PDCCH}}^{max,(X,Y),\mu}$.

Accordingly, when a UE indicates FG 11-2 with one or more elements of (2, 2), (4, 3), and (7, 3) and if the UE also supports FG 55-6, then the UE may indicate support of the Relaxed (2, 2) in addition to the set reported in FG 11-2. In this case, a new definition of the set of (2, 2), (4, 3), and (7, 3) may be established by taking the union of the set in FG 11-2 and {(2,2)} (e.g., the Relaxed (2, 2)) in FG 55-6. Such union operation may be done (e.g., may be performed) per SCS and per processing type for each FS in which support of both FG 11-2 and FG 55-6 are indicated.

For example, and referring to FIG. 29, in some embodiments, a UE that is capable of supporting a first set of capabilities (e.g., including the Release 18 capabilities) and a second set of capabilities (e.g., including the Release 16 and 17 capabilities) may perform a method 2900 comprising one or more of the following operations. The UE may send first information, to a network node, indicating that: (i) the UE is capable of monitoring multiple span-pattern combinations and (ii) the UE is capable of supporting both the first set of capabilities and the second set of capabilities (operation 2901). Based on a union of supported span patterns in the first set of capabilities and supported span patterns in the second set of capabilities, the UE may perform PDCCH span-based monitoring (operation 2902). For example, the UE may determine per-span blind decodings (BD) or may determine per-span control carrier elements (CCE) based on a union of supported span patterns in the first set of capabilities and supported span patterns in the second set of capabilities. This feature corresponds to the following language adopted in 3GPP Specification (e.g., 5G spec) 38.306 for ***pdcch-MonitoringSpan2-2-r18:*** "When a UE reports both *pdcch-Monitoring-r16* and this capability, the union of supported span patterns in *pdcch-Monitoring-r16* and this capability establishes the multiple combinations (X,Y) used to determine per-span BD/CCE limit as described in Clause 10 of TS 38.213." This feature also corresponds to the proposed language in bold in column 9 of FIG. 12: "When a UE reports both FG11-2 and this [55-6], the union of supported span patterns in FG11-2 and this [55-6] establishes the multiple combinations (X,Y) used to determine per-span BD/CCE limit as described in Clause 10 of TS38.213."

FIG. 30 is a block diagram of an electronic device in a network environment, according to some embodiments of the present disclosure.

Referring to FIG. 30, an electronic device 3001 in a network environment 3000 may communicate with an electronic device 3002 via a first network 3098 (e.g., a short-range wireless communication network), or with an electronic device 3004 or a server 3008 via a second network 3099 (e.g., a long-range wireless communication network). The electronic device 3001 may communicate with the electronic device 3004 via the server 3008. The electronic device 3001 may include a processor 3020, a memory 3030, an input device 3040, a sound output device 3055, a display device 3060, an audio module 3070, a sensor module 3076, an interface 3077, a haptic module 3079, a camera module 3080, a power management module 3088, a battery 3089, a communication module 3090, a subscriber identification module (SIM) card 3096, and/or an antenna module 3097. In one embodiment, at least one of the components (e.g., the display device 3060 or the camera module 3080) may be omitted from the electronic device 3001, or one or more other components may be added to the electronic device 3001. Some of the components may be implemented as a single integrated circuit (IC). For example, the sensor module 3076 (e.g., a fingerprint sensor, an iris sensor, or an illuminance sensor) may be embedded in the display device 3060 (e.g., a display).

The processor 3020 may execute software (e.g., a program 3040) to control at least one other component (e.g., a hardware or a software component) of the electronic device 3001 coupled to the processor 3020, and may perform various data processing or computations.

As at least part of the data processing or computations, the processor 3020 may load a command or data received from another component (e.g., the sensor module 3076 or the communication module 3090) in volatile memory 3032, may process the command or the data stored in the volatile memory 3032, and may store resulting data in non-volatile memory 3034. The processor 3020 may include a main processor 3021 (e.g., a CPU or an application processor (AP)), and an auxiliary processor 3023 (e.g., a graphics processing unit (GPU), an image signal processor (ISP), a sensor hub processor, or a communication processor (CP)) that is operable independently from, or in conjunction with, the main processor 3021. Additionally or alternatively, the auxiliary processor 3023 may be adapted to consume less power than the main processor 3021, or to execute a particular function. The auxiliary processor 3023 may be implemented as being separate from, or a part of, the main processor 3021.

The auxiliary processor 3023 may control at least some of the functions or states related to at least one component (e.g., the display device 3060, the sensor module 3076, or the communication module 3090), as opposed to the main processor 3021 while the main processor 3021 is in an inactive (e.g., sleep) state, or together with the main processor 3021 while the main processor 3021 is in an active state (e.g., executing an application). The auxiliary processor 3023 (e.g., an image signal processor or a communication processor) may be implemented as part of another component (e.g., the camera module 3080 or the communication module 3090) functionally related to the auxiliary processor 3023.

The memory 3030 may store various data used by at least one component (e.g., the processor 3020 or the sensor module 3076) of the electronic device 3001. The various data may include, for example, software (e.g., the program 3040) and input data or output data for a command related thereto. The memory 3030 may include the volatile memory 3032 or the non-volatile memory 3034.

The program 3040 may be stored in the memory 3030 as software, and may include, for example, an operating system (OS) 3042, middleware 3044, or an application 3046.

The input device 3050 may receive a command or data to be used by another component (e.g., the processor 3020) of the electronic device 3001, from the outside (e.g., a user) of the electronic device 3001. The input device 3050 may include, for example, a microphone, a mouse, or a keyboard.

The sound output device 3055 may output sound signals to the outside of the electronic device 3001. The sound output device 3055 may include, for example, a speaker or a receiver. The speaker may be used for general purposes, such as playing multimedia or recording, and the receiver may be used for receiving an incoming call. The receiver may be implemented as separate from, or as a part of, the speaker.

The display device 3060 may visually provide information to the outside (e.g., to a user) of the electronic device 3001. The display device 3060 may include, for example, a display, a hologram device, or a projector, and may include control circuitry to control a corresponding one of the display, hologram device, and projector. The display device 3060 may include touch circuitry adapted to detect a touch, or may include sensor circuitry (e.g., a pressure sensor) adapted to measure the intensity of force incurred by the touch.

The audio module 3070 may convert a sound into an electrical signal and vice versa. The audio module 3070 may obtain the sound via the input device 3050 or may output the sound via the sound output device 3055 or a headphone of an external electronic device 3002 directly (e.g., wired) or wirelessly coupled to the electronic device 3001.

The sensor module 3076 may detect an operational state (e.g., power or temperature) of the electronic device 3001, or an environmental state (e.g., a state of a user) external to the electronic device 3001. The sensor module 3076 may then generate an electrical signal or data value corresponding to the detected state. The sensor module 3076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 3077 may support one or more specified protocols to be used for the electronic device 3001 to be coupled to the external electronic device 3002 directly (e.g., wired) or wirelessly. The interface 3077 may include, for example, a high-definition multimedia interface (HDMI), a universal serial bus (USB) interface, a secure digital (SD) card interface, or an audio interface.

A connecting terminal 3078 may include a connector via which the electronic device 3001 may be physically connected to the external electronic device 3002. The connecting terminal 3078 may include, for example, an HDMI connector, a USB connector, an SD card connector, or an audio connector (e.g., a headphone connector).

The haptic module 3079 may convert an electrical signal into a mechanical stimulus (e.g., a vibration or a movement) or an electrical stimulus, which may be recognized by a user via tactile sensation or kinesthetic sensation. The haptic module 3079 may include, for example, a motor, a piezoelectric element, or an electrical stimulator.

The camera module 3080 may capture a still image or moving images. The camera module 3080 may include one or more lenses, image sensors, image signal processors, or flashes. The power management module 3088 may manage power that is supplied to the electronic device 3001. The power management module 3088 may be implemented as at least part of, for example, a power management integrated circuit (PMIC).

The battery 3089 may supply power to at least one component of the electronic device 3001. The battery 3089 may include, for example, a primary cell that is not rechargeable, a secondary cell that is rechargeable, or a fuel cell.

The communication module 3090 may support establishing a direct (e.g., wired) communication channel or a wireless communication channel between the electronic device 3001 and the external electronic device (e.g., the electronic device 3002, the electronic device 3004, or the server 3008), and may support performing communication via the established communication channel. The communication module 3090 may include one or more communication processors that are operable independently from the processor 3020 (e.g., the AP), and may support a direct (e.g., wired) communication or a wireless communication. The communication module 3090 may include a wireless communication module 3092 (e.g., a cellular communication module, a short-range wireless communication module, or a global navigation satellite system (GNSS) communication module) or a wired communication module 3094 (e.g., a local area network (LAN) communication module or a power line communication (PLC) module). A corresponding one of these communication modules may communicate with the external electronic device via the first network 3098 (e.g., a short-range communication network, such as BLUETOOTHTM, wireless-fidelity (Wi-Fi) direct, or a standard of the Infrared Data Association (IrDA)), or via the second network 3099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 3092 may identify and authenticate the electronic device 3001 in a communication network, such as the first network 3098 or the second network 3099, using subscriber information (e.g., international mobile subscriber identity (IMSI)) stored in the subscriber identification module 3096.

The antenna module 3097 may transmit or receive a signal or power to or from the outside (e.g., the external electronic device) of the electronic device 3001. The antenna module 3097 may include one or more antennas. The communication module 3090 (e.g., the wireless communication module 3092) may select at least one of the one or more antennas appropriate for a communication scheme used in the communication network, such as the first network 3098 or the second network 3099. The signal or the power may then be transmitted or received between the communication module 3090 and the external electronic device via the selected at least one antenna.

Commands or data may be transmitted or received between the electronic device 3001 and the external electronic device 3004 via the server 3008 coupled to the second network 3099. Each of the electronic devices 3002 and 3004 may be a device of a same type as, or a different type, from the electronic device 3001. All or some of operations to be executed at the electronic device 3001 may be executed at one or more of the external electronic devices 3002, 3004, or 3008. For example, if the electronic device 3001 should perform a function or a service automatically, or in response to a request from a user or another device, the electronic device 3001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 3001. The electronic device 3001 may provide the outcome, with or without further processing of the outcome, as at least part of a reply to the request. To that end, cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g.,

multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations may be depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims, with functional equivalents thereof to be included therein.

**Claims**

**1.** A method comprising:

sending, by a user equipment, UE, first information indicating that the UE supports a first set of capabilities and a second set of capabilities different from the first set of capabilities;
determining, by the UE, whether a monitored span pattern satisfies a first span pattern associated with the first set of capabilities; and
performing, by the UE, physical downlink control channel, PDCCH, span-based monitoring based on a first value associated with the first set of capabilities or based on a second value associated with the second set of capabilities.

**2.** The method of claim 1, wherein:

the first information comprises the first value;
the first span pattern is a relaxed (2, 2) span pattern comprising a span of two symbols, a span gap of two symbols, and one or more additional symbols between spans;
the monitored span pattern satisfies the relaxed (2, 2) span pattern; and
the performing is based on the first value.

**3.** The method of claim 1, wherein:

the first information comprises the second value;
the monitored span pattern satisfies a second span pattern that is not a relaxed (2, 2) span pattern, the second span pattern being associated with the second set of capabilities; and
the performing is based on the second value.

**4.** The method of any one of claims 1 to 3, wherein:

the first set of capabilities comprise one or more of feature groups 55-6, 55-6a, 55-6b, 55-6c, 55-6d, 55-6e, 55-6f, 55-6g, or 55-6h; and
the second set of capabilities comprise one or more of feature groups 11-2, 11-2a, 11-2b, 11-2c, 11-2d, 11-2e, 11-2f, 11-2g, or 23-2-1e.

**5.** The method of any one of claims 1 to 4, further comprising:

receiving, by the UE, as part of a carrier aggregation, CA, transmission or a dual connectivity, DC, transmission, a plurality of PDCCH monitoring occasion configurations associated with corresponding ones of a plurality of cells serving the UE,
wherein:

the determining, by the UE, whether the monitored span pattern satisfies the first span pattern comprises determining a number of cells associated with the plurality of PDCCH monitoring occasion configurations that satisfy the first span pattern; and based on the number of cells satisfying a first threshold, performing the PDCCH span-based monitoring based on the first set of capabilities.

**6.** The method of claim 5, wherein the first threshold is more likely than not to trigger a usage of the first set of capabilities.

**7.** The method of claim 6, wherein the first threshold corresponds to the number of cells being greater than or equal to one.

**8.** The method of any one of claims 5 to 7, further comprising based on the number of cells not satisfying the first threshold, performing the PDCCH span-based monitoring based on the second value.

**9.** The method of claim 8, wherein the first threshold is more likely than not to trigger a usage of the second set of capabilities.

**10.** The method of claim 9, wherein the first threshold corresponds to the number of cells being equal to a total number of cells serving the UE.

**11.** The method of any one of claims 5 to 10, wherein the physical downlink control channel, PDCCH, span-based monitoring is performed based on the number of cells associated with the plurality of PDCCH monitoring occasion configurations that satisfy the first span pattern, based on determining that the cells of a plurality of cells serving the UE are not aligned.

**12.** A method comprising:

sending, by a user equipment, UE, first information indicating that:

the UE is capable of monitoring multiple span-pattern combinations; and
the UE supports a first set of capabilities and a second set of capabilities; and

based on a union of supported span patterns in the first set of capabilities and supported span patterns in the second set of capabilities, performing, by the UE, physical downlink control channel, PDCCH, span-based monitoring.

**13.** The method of claim 12, wherein the performing the PDCCH span-based monitoring based on the sending of the first information comprises determining per-span blind decodings, BD, or determining per-span control carrier elements, CCE, based on a union of supported span patterns in the first set of capabilities and supported span patterns in the second set of capabilities.

**14.** The method of claim 12 or 13, wherein:

the first set of capabilities comprise one or more of feature groups 55-6, 55-6a, 55-6b, 55-6c, 55-6d, 55-6e, 55-6f, 55-6g, or 55-6h; and
the second set of capabilities comprise one or more of feature groups 11-2, 11-2a, 11-2b, 11-2c, 11-2d, 11-2e, 11-2f, 11-2g, or 23-2-1e.

**15.** A method comprising:

sending, by a user equipment, UE, that is capable of supporting a first set of capabilities and a second set of capabilities, first information indicating whether the UE is capable of supporting the first set of capabilities and/or the second set of capabilities; and
performing, by the UE, PDCCH span-based monitoring based on the sending of the first information,
wherein the first set of capabilities comprises features associated with a first span pattern, and wherein the second set of capabilities comprises features associated with a second span pattern.

FIG. 1A

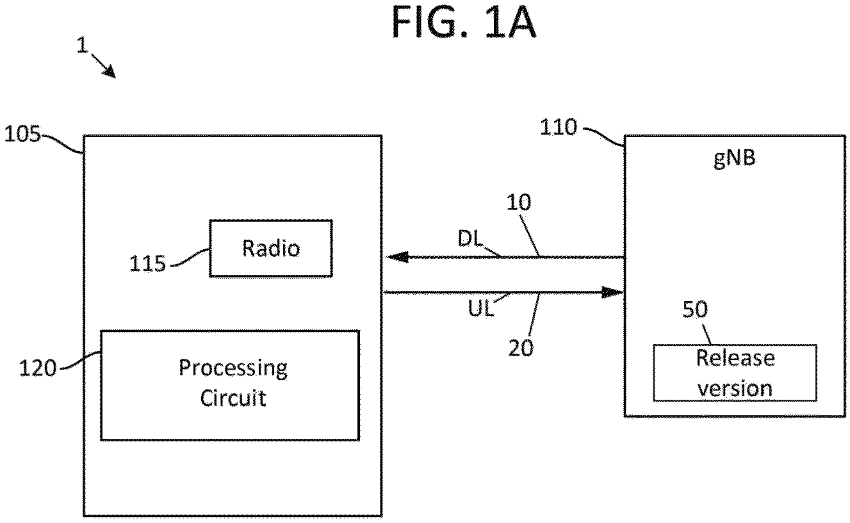
1
105
110
gNB
Radio
115
10
DL
UL
20
50
Release version
120
Processing Circuit

FIG. 1B

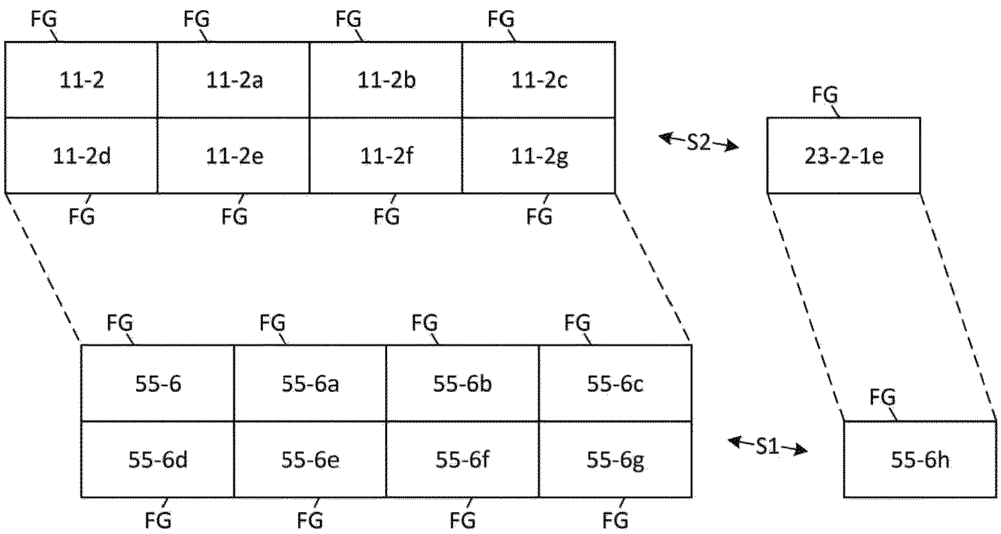
FG
11-2
11-2a
11-2b
11-2c
11-2d
11-2e
11-2f
11-2g
S2
23-2-1e
55-6
55-6a
55-6b
55-6c
55-6d
55-6e
55-6f
55-6g
S1
55-6h

FIG. 2

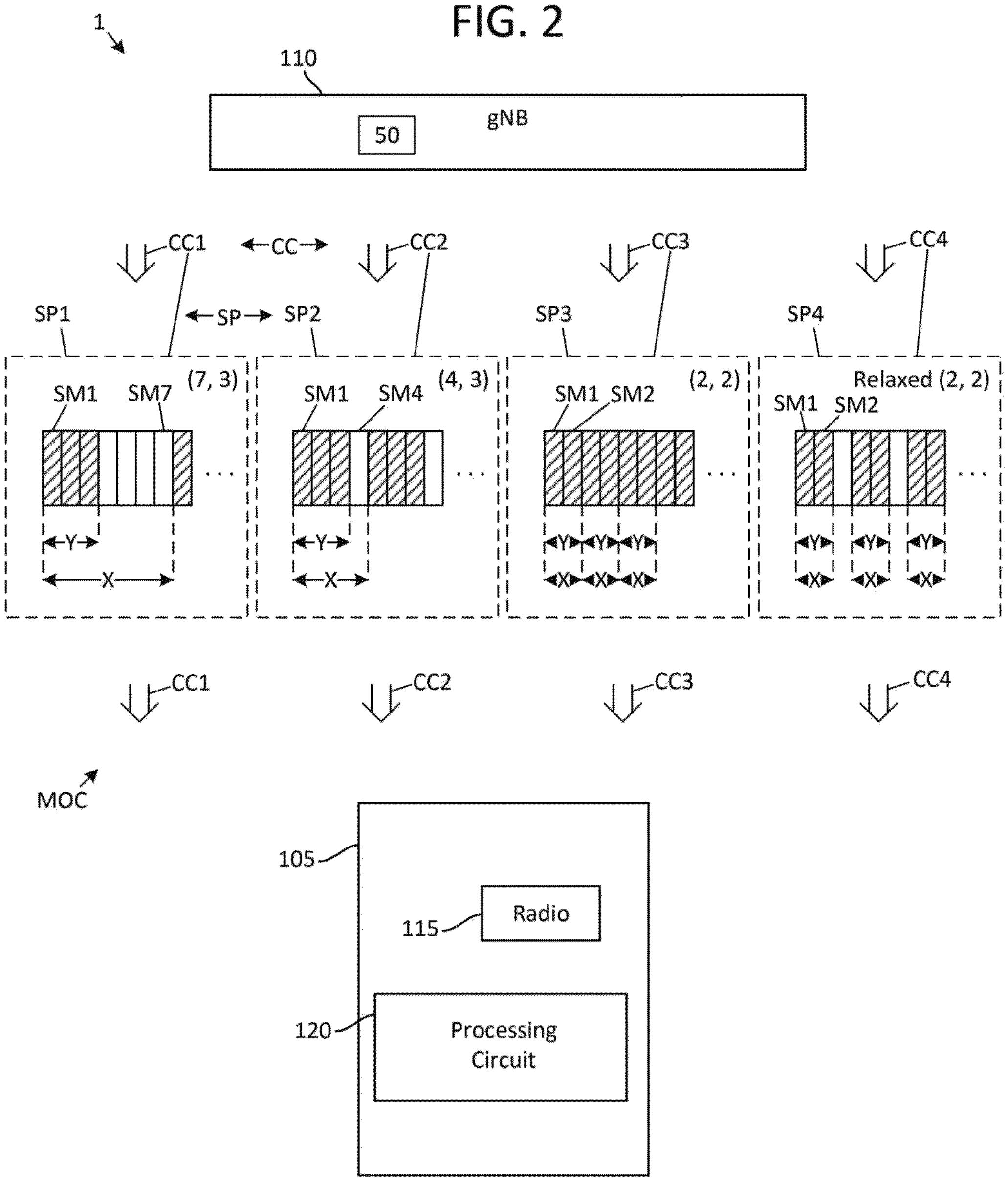
1
110
gNB
50
CC1
CC
CC2
CC3
CC4
SP1
SP
SP2
SP3
SP4
(7, 3)
SM1
SM7
(4, 3)
SM1
SM4
(2, 2)
SM1
SM2
Relaxed (2, 2)
SM1
SM2
Y
X
CC1
CC2
CC3
CC4
MOC
105
115
Radio
120
Processing Circuit

FIG. 3A

| 1 | 2 | 3 | 4 |
|---|---|---|---|
| **Index** | **Feature group** | **Components** | **Prerequisite feature groups** |
| 11-2 | Rel-16 PDCCH monitoring capability | 1. Supported combination(s) of (X, Y, μ). For each reported combination, the UE supports the limit C on the maximum number of non-overlapped CCEs for channel estimation per PDCCH monitoring span and the limit M on the maximum number of monitored PDCCH candidates per PDCCH monitoring span<br>2. Maximum number of DL and UL unicast DCI formats in a span<br>For the set of monitoring occasions which are within the same span:<br>- Processing one unicast DCI scheduling DL and one unicast DCI scheduling UL per scheduled CC across this set of monitoring occasions for FDD<br>- Processing one unicast DCI scheduling DL and two unicast DCI scheduling UL per scheduled CC across this set of monitoring occasions for TDD<br>- Processing two unicast DCI scheduling DL and one unicast DCI scheduling UL per scheduled CC across this set of monitoring occasions for TDD | |

FIG. 3B

| 5 | 6 | 7 | 8 |
|---|---|---|---|
| **Field name in TS 38.331** | **Parent IE in TS 38.331** | **Note** | **Mandatory/Optional** |
| *pdcch-Monitoring-r16 {*<br>*pdsch-ProcessingType1-r16{*<br>*scs-15kHz-r16*<br>*PDCCH-MonitoringOccasions-r16,*<br>*scs-30kHz-r16*<br>*PDCCH-MonitoringOccasions-r16*<br>*},*<br>*pdsch-ProcessingType2-r16 {*<br>*scs-15kHz-r16*<br>*PDCCH-MonitoringOccasions-r16,*<br>*scs-30kHz-r16*<br>*PDCCH-MonitoringOccasions-r16*<br>*}* | *FeatureSetDownlink-v1610* | This capability is signalled for SCS 15 kHz and 30 kHz.<br><br>For μ =0 and 1, candidate value set for (X, Y, μ): {(7, 3, μ), (4, 3, μ), (2, 2, μ)}<br><br>For component 1, a list of separate UE capabilities (X, Y, μ)for processing capability #1;<br><br>For component 1, a list of separate UE capabilities (X, Y, μ)for processing capability #2; | Optional with capability signalling |

FIG. 4A

| 1 | 2 | 3 | 4 |
|---|---|---|---|
| **Index** | **Feature group** | **Components** | **Prerequisite feature groups** |
| 11-2a | Capability on the number of CCs for monitoring a maximum number of BDs and non-overlapped CCEs per span when configured with DL CA with Rel-16 PDCCH monitoring capability on all the serving cells | 1. Capability on the number of CCs for monitoring a maximum number of BDs and non-overlapped CCEs per span when configured with DL CA with Rel-16 PDCCH monitoring capability on all the serving cells<br>- Candidate value for the component: {2, 3, ..., 16)<br><br>2. Supported span arrangement for CA<br>- Candidate value for the component: {aligned spans only, aligned spans and non-aligned spans} | 11-2 |

FIG. 4B

| 5 | 6 | 7 | 8 |
|---|---|---|---|
| **Field name in TS 38.331** | **Parent IE in TS 38.331** | **Note** | **Mandatory/Optional** |
| *pdcch-MonitoringCA-r16 {<br>maxNumberOfMonitoringCC-r16 ,<br>supportedSpanArrangement-r16<br>}* | *interFreqDAPS-r16* | | Optional with capability signalling |

FIG. 5A

| 1 | 2 | 3 | 4 |
| --- | --- | --- | --- |
| **Index** | **Feature group** | **Components** | **Prerequisite feature groups** |
| 11-2b | Mix of Rel. 16 PDCCH monitoring capability and Rel. 15 PDCCH monitoring capability on different carriers | Support Rel-15 monitoring capability and Rel-16 monitoring capability on different serving cells | 11-2 |

FIG. 5B

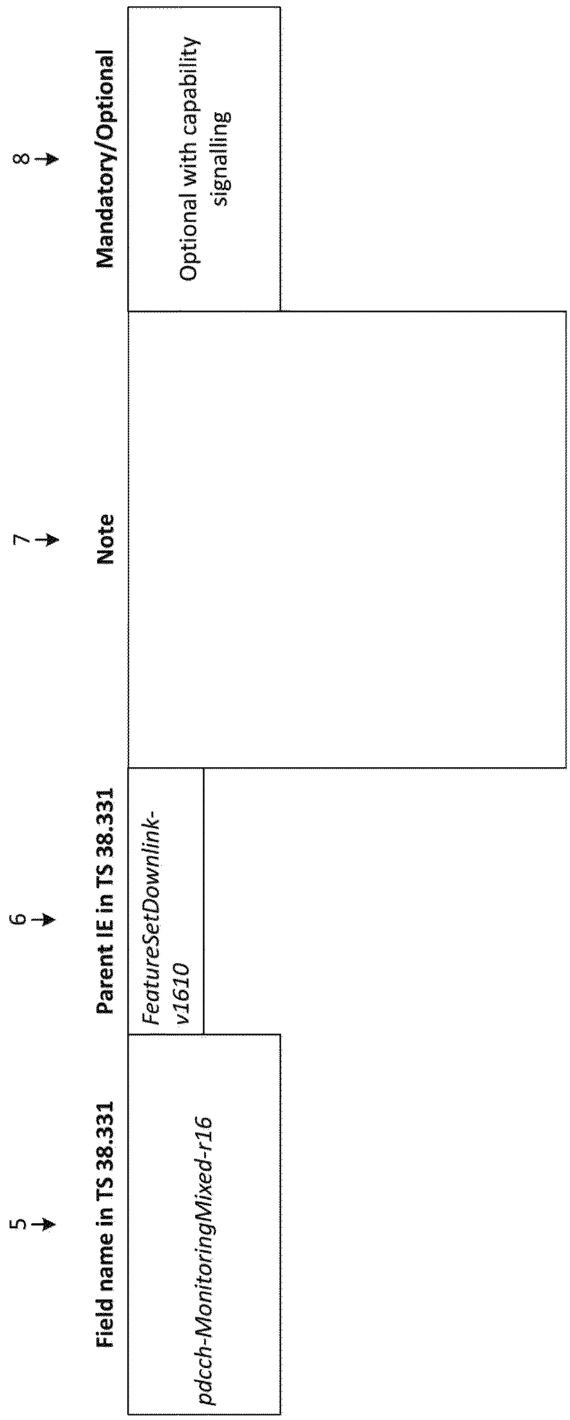
5
Field name in TS 38.331
pdcch-MonitoringMixed-r16
6
Parent IE in TS 38.331
FeatureSetDownlink-v1610
7
Note
8
Mandatory/Optional
Optional with capability signalling

FIG. 6A

| 1 | 2 | 3 | 4 |
|---|---|---|---|
| **Index** | **Feature group** | **Components** | **Prerequisite feature groups** |
| 11-2c | Number of carriers for CCE/BD scaling with DL CA with mix of Rel. 16 and Rel. 15 PDCCH monitoring capabilities on different carriers | 1. Supported combination(s) of (pdcch-BlindDetectionCA-R15, pdcch-BlindDetectionCA-R16)<br>- Candidate values for pdcch-BlindDetectionCA-R15 is 1 to 15<br>- Candidate values for pdcch-BlindDetectionCA-R16 is 1 to 15<br>2. Supported span arrangement for CA<br>- Candidate value for the component: {aligned spans only, aligned spans and non-aligned spans} | 11-2b |

FIG. 6B

| 5 | 6 | 7 | 8 |
|---|---|---|---|
| **Field name in TS 38.331** | **Parent IE in TS 38.331** | **Note** | **Mandatory/Optional** |
| *pdcch-BlindDetectionCA-Mixed-r16 { pdcch-BlindDetectionCA1-r16, pdcch-BlindDetectionCA2-r16, supportedSpanArrangement-r16 }* | *CA-ParametersNR-v1610* | *The minimum of the summation of capability on the number of CCs with Rel-15 PDCCH monitoring capability and the capability on the number of CCs with Rel-16 PDCCH monitoring capability is 3* | Optional with capability signalling |

FIG. 7A

| 1 | 2 | 3 | 4 |
|---|---|---|---|
| **Index** | **Feature group** | **Components** | **Prerequisite feature groups** |
| 11-2d | Capability on the number of CCs for monitoring a maximum number of BDs and non-overlapped CCEs per span for MCG and for SCG when configured for NR-DC operation with Rel-16 PDCCH monitoring capability on all the serving cells | Supported combination of (*pdcch-BlindDetectionMCG-UE-r16, pdcch-BlindDetectionSCG-UE-r16*) | 11-2 |

FIG. 7B

5 → **Field name in TS 38.331**

*pdcch-BlindDetectionMCG-UE-r16 , pdcch-BlindDetectionSCG-UE-r16*

6 → **Parent IE in TS 38.331**

*CA-ParametersNR-v1610*

7 → **Note**

If the UE reports pdcch-BlindDetectionCA-r16,
- Candidate values for pdcch-BlindDetectionMCG-UE-r16 is 1 to pdcch-BlindDetectionCA-r16-1
- Candidate values for pdcch-BlindDetectionSCG-UE-r16 is 1 to pdcch-BlindDetectionCA-r16-1
- - pdcch-BlindDetectionMCG-UE-r16 + pdcch-BlindDetectionSCG-UE-r16 >= pdcch-BlindDetectionCA-r16

Otherwise, if N_(NR-DC,max,r16)^(DL,cells) is a maximum total number of downlink cells for which the UE is provided monitoringCapabilityConfig-r16 = r16monitoringcapability and the UE is configured on both the MCG and the SCG for NR-DC as indicated in UE-NR-Capability
- the value of pdcch-BlindDetectionMCG-UE-r16 or of pdcch-BlindDetectionSCG-UE-r16 is 1,
- pdcch-BlindDetectionMCG-UE-r16 + pdcch-BlindDetectionSCG-UE-r16 >= N_(NR-DC,max,r16)^(DL,cells)

Note: If a UE supports FG 11-2a or FG 11-2f, then the capability defined by FG 11-2a or FG 11-2f is applied to FG 11-2d.

8 → **Mandatory/Optional**

Optional with capability signalling

FIG. 8A

| 1 Index | 2 Feature group | 3 Components | 4 Prerequisite feature groups |
|---|---|---|---|
| 11-2e | Number of carriers for CCE/BD scaling for MCG and for SCG when configured for NR-DC operation with mix of Rel. 16 and Rel. 15 PDCCH monitoring capabilities on different carriers | Supported combination(s) of (*pdcch-BlindDetectionMCG-UE-r15, pdcch-BlindDetectionSCG-UE-r15, pdcch-BlindDetectionMCG-UE-r16, pdcch-BlindDetectionSCG-UE-r16*) | 11-2b |

FIG. 8B

| 5 Field name in TS 38.331 | 6 Parent IE in TS 38.331 |
|---|---|
| *pdcch-BlindDetectionMCG-UE-Mixed-r16 {<br>pdcch-BlindDetectionMCG-UE1-r16<br>pdcch-BlindDetectionMCG-UE2-r16<br>}<br><br>pdcch-BlindDetectionSCG-UE-Mixed-r16 {<br>pdcch-BlindDetectionSCG-UE1-r16,<br>pdcch-BlindDetectionSCG-UE2-r16<br>}* | *CA-ParametersNR-v1610* |

FIG. 8C

| 7<br>Note | 8<br>Mandatory/Optional |
| --- | --- |
| One combination of (pdcch-BlindDetectionMCG-UE-r15, pdcch-BlindDetectionSCG-UE-r15, pdcch-BlindDetectionMCG-UE-r16, pdcch-BlindDetectionSCG-UE-r16) corresponds to one combination of (pdcch-BlindDetectionCA-r15, pdcch-BlindDetectionCA-r16)<br><br>If the UE reports pdcch-BlindDetectionCA-r15,<br>- Candidate values for pdcch-BlindDetectionMCG-UE-r15 is 0 to pdcch-BlindDetectionCA-r15<br>- Candidate values for pdcch-BlindDetectionSCG-UE-r15 is 0 to pdcch-BlindDetectionCA-r15<br>- pdcch-BlindDetectionMCG-UE-r15 + pdcch-BlindDetectionSCG-UE-r15>= pdcch-BlindDetectionCA-r15<br>Otherwise, if N_(NR-DC,max,r15)^(DL,cells) is a maximum total number of downlink cells for which the UE is provided monitoringCapabilityConfig-r16 = r15monitoringcapability<br>- Candidate values for pdcch-BlindDetectionMCG-UE-r15 is [0, 1, 2]<br>- Candidate values for pdcch-BlindDetectionSCG-UE-r15 is [0, 1, 2]<br>- pdcch-BlindDetectionMCG-UE-r15 + pdcch-BlindDetectionSCG-UE-r15 >= N_(NR-DC,max,r15)^(DL,cells)<br>If the UE reports pdcch-BlindDetectionCA-r16,<br>- Candidate values for pdcch-BlindDetectionMCG-UE-r16 is 0 to pdcch-BlindDetectionCA-r16<br>- Candidate values for pdcch-BlindDetectionSCG-UE-r16 is 0 to pdcch-BlindDetectionCA-r16<br>- pdcch-BlindDetectionMCG-UE-r16 + pdcch-BlindDetectionSCG-UE-r16>= pdcch-BlindDetectionCA-r16<br>Otherwise, if N_(NR-DC,max,r16)^(DL,cells) is a maximum total number of downlink cells for which the UE is provided monitoringCapabilityConfig-r16 = r16monitoringcapability<br>- Candidate values for pdcch-BlindDetectionMCG-UE-r16 is [0, 1]<br>- Candidate values for pdcch-BlindDetectionSCG-UE-r16 is [0, 1]<br>- pdcch-BlindDetectionMCG-UE-r16 + pdcch-BlindDetectionSCG-UE-r16 >= N_(NR-DC,max,r16)^(DL,cells)<br>Note: If a UE supports FG 11-2c or FG 11-2g, then the capability defined by FG 11-2c or FG 11-2g is applied to FG 11-2e. | Optional with capability signalling |

FIG. 9A

| Index (1) | Feature group (2) | Components (3) | Prerequisite feature groups (4) |
|---|---|---|---|
| 11-2f | Capability on the number of CCs for monitoring a maximum number of BDs and non-overlapped CCEs per span when configured with DL CA with Rel-16 PDCCH monitoring capability on all the serving cells with restriction for non-aligned span case | 1. Capability on the number of CCs for monitoring a maximum number of BDs and non-overlapped CCEs per span when configured with DL CA with Rel-16 PDCCH monitoring capability on all the serving cells<br>- Candidate value for the component: {2, 3, ..., 16}<br>2. UE supports aligned span and non-aligned span<br>In case of non-aligned span when the configured number of cells with Rel-16 PDCCH monitoring is larger than the UE reported value, PDCCH monitoring occasion(s) should be configured only on same symbol(s) every slot | 11-2 |

FIG. 9B

| Field name in TS 38.331 (5) | Parent IE in TS 38.331 (6) | Note (7) | Mandatory/Optional (8) |
|---|---|---|---|
| *pdcch-BlindDetpdcch-MonitoringCA-NonAlignedSpan-r16ectionMCG-UE-r16 , pdcch-BlindDetectionSCG-UE-r16* | *CA-ParametersNR-v1640* | | Optional with capability signalling |

FIG. 10A

| 1 | 2 | 3 | 4 |
|---|---|---|---|
| **Index** | **Feature group** | **Components** | **Prerequisite feature groups** |
| 11-2g | Number of carriers for CCE/BD scaling with DL CA with mix of Rel. 16 and Rel. 15 PDCCH monitoring capabilities on different carriers with restriction for non-aligned span case | 1. Supported combination(s) of (pdcch-BlindDetectionCA-R15, pdcch-BlindDetectionCA-R16)<br>- Candidate values for pdcch-BlindDetectionCA-R15 is 1 to 15<br>- Candidate values for pdcch-BlindDetectionCA-R16 is 1 to 15<br>2. UE supports aligned span and non-aligned span<br>In case of non-aligned span when the configured number of cells with Rel-16 PDCCH monitoring is larger than the UE reported value, PDCCH monitoring occasion(s) should be configured only on same symbol(s) every slot | 11-2b |

FIG. 10B

| 5 Field name in TS 38.331 | 6 Parent IE in TS 38.331 | 7 Note | 8 Mandatory/Optional |
|---|---|---|---|
| *pdcch-BlindDetectionCA-Mixed-NonAlignedSpan-r16*<br>*{*<br>*pdcch-BlindDetectionCA1-r16,*<br>*pdcch-BlindDetectionCA2-r16*<br>*}* | *CA-ParametersNR-v1640* | The minimum of the summation of capability on the number of CCs with Rel-15 PDCCH monitoring capability and the capability on the number of CCs with Rel-16 PDCCH monitoring capability is 3 | Optional with capability signalling |

FIG. 11A

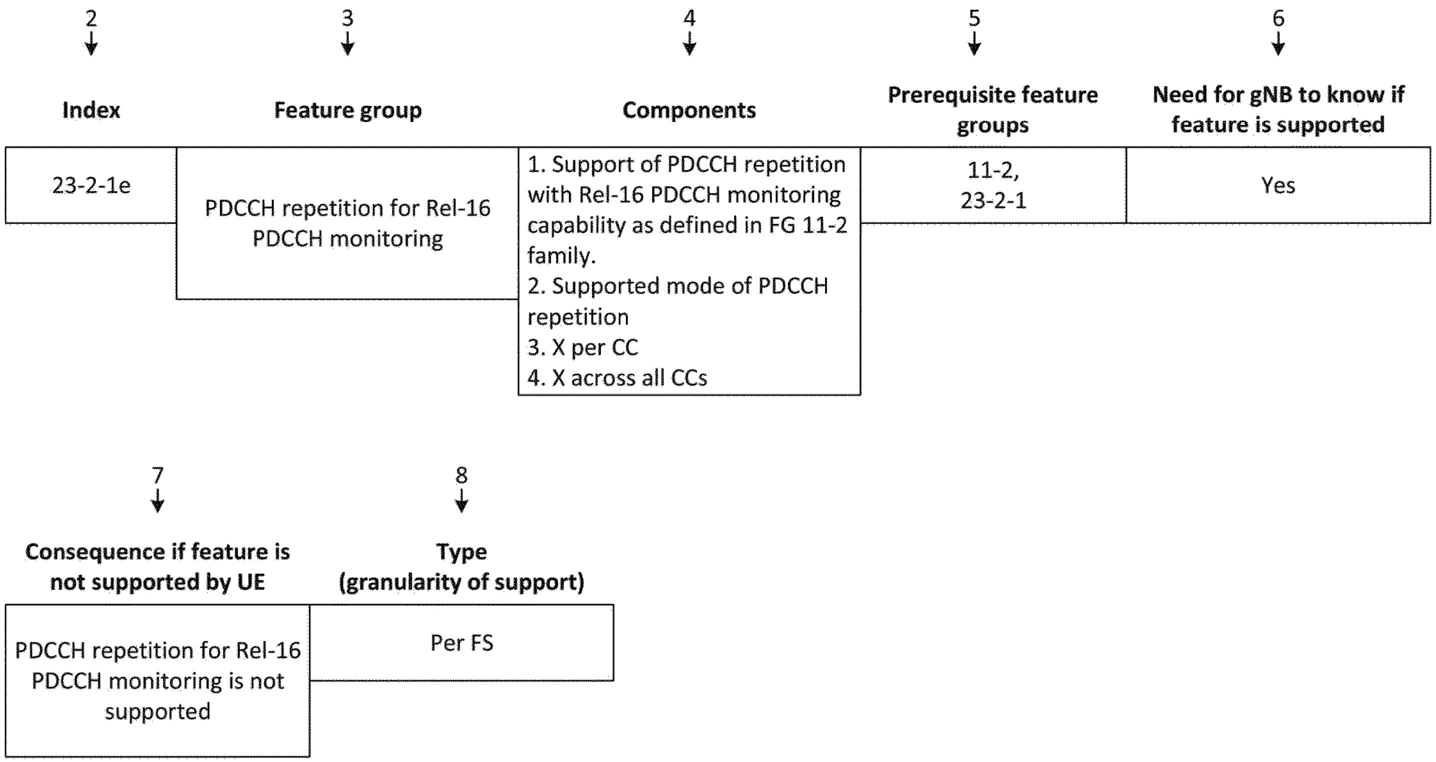
2
Index
23-2-1e
3
Feature group
PDCCH repetition for Rel-16 PDCCH monitoring
4
Components
1. Support of PDCCH repetition with Rel-16 PDCCH monitoring capability as defined in FG 11-2 family.
2. Supported mode of PDCCH repetition
3. X per CC
4. X across all CCs
5
Prerequisite feature groups
11-2,
23-2-1
6
Need for gNB to know if feature is supported
Yes
7
Consequence if feature is not supported by UE
PDCCH repetition for Rel-16 PDCCH monitoring is not supported
8
Type
(granularity of support)
Per FS

FIG. 11B

| Note (9) | Mandatory/Optional (10) |
| --- | --- |
| This capability is signalled for SCS 15 kHz and 30 kHz.<br><br>Component2: {intra-span, inter-span, both}<br><br>Component3: {4, 8, 16, 32, 44, 64, no limit}<br><br>Component 4: {4, 8, 16, 32, 44, 64, 128, 256, 512, no limit}<br><br>Note:<br>- Components 3 and 4 are reported only if UE supports inter-span PDCCH repetition.<br>- The limit X is associated with the total number of linked candidates of which the first candidate is received and the second one has not been received at any given span, where "received" and "not been received" is wrt the end of the corresponding span of PDCCH candidate.<br>- The limit X is indicated as a total count assuming count 1 for AL=1; 2 for AL=2; 4 for AL=4 or 8 or 16.<br>Candidate value "no limit" does not imply BD limit can be exceeded | Optional with capability signalling |

FIG. 12

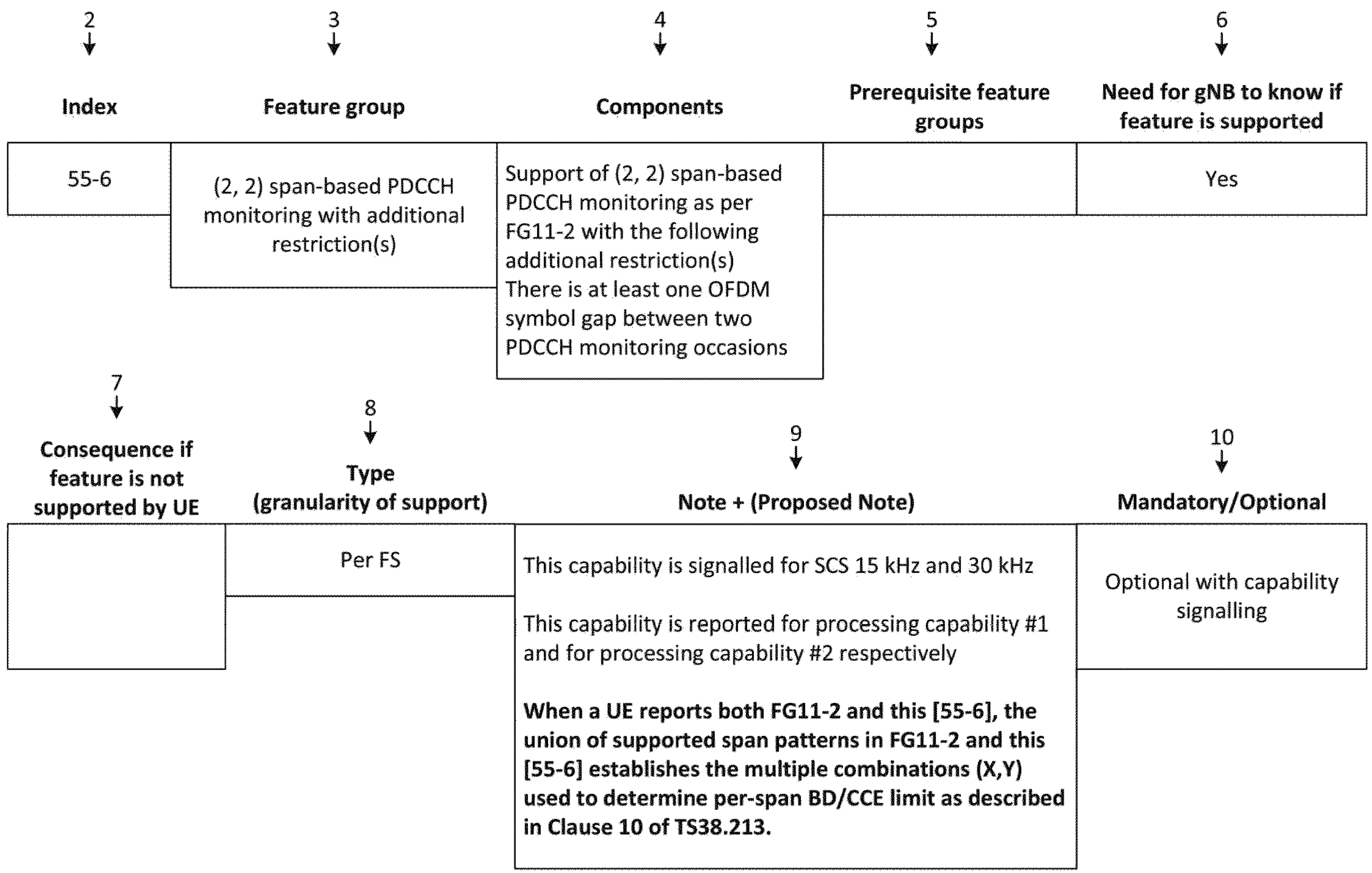
2
Index
55-6
3
Feature group
(2, 2) span-based PDCCH monitoring with additional restriction(s)
4
Components
Support of (2, 2) span-based PDCCH monitoring as per FG11-2 with the following additional restriction(s)
There is at least one OFDM symbol gap between two PDCCH monitoring occasions
5
Prerequisite feature groups
6
Need for gNB to know if feature is supported
Yes
7
Consequence if feature is not supported by UE
8
Type
(granularity of support)
Per FS
9
Note + (Proposed Note)
This capability is signalled for SCS 15 kHz and 30 kHz
This capability is reported for processing capability #1 and for processing capability #2 respectively
When a UE reports both FG11-2 and this [55-6], the union of supported span patterns in FG11-2 and this [55-6] establishes the multiple combinations (X,Y) used to determine per-span BD/CCE limit as described in Clause 10 of TS38.213.
10
Mandatory/Optional
Optional with capability signalling

FIG. 13

| Index (2) | Feature group (3) | Components (4) | Prerequisite feature groups (5) |
| --- | --- | --- | --- |
| 55-6a | Capability on the number of CCs for monitoring a maximum number of BDs and non-overlapped CCEs per span when configured with DL CA with Rel-16 PDCCH monitoring capability on all the serving cells | 1.Capability on the number of CCs for monitoring a maximum number of BDs and non-overlapped CCEs per span when configured with DL CA with Rel-16 PDCCH monitoring capability on all the serving cells<br>- Candidate value for the component: {2, 3, ..., 16)<br><br>2.Supported span arrangement for CA<br>-Candidate value for the component: {aligned spans only, aligned spans and non-aligned spans} | FG11-2 for (7, 3) or (4, 3) span based PDCCH monitoring;<br><br>FG55-6 for (2, 2) span based PDCCH monitoring with additional restriction(s) |

| Need for gNB to know if feature is supported (6) | Type (granularity of support) (8) | Note (Proposed) (9) | Mandatory/Optional (10) |
| --- | --- | --- | --- |
| Yes | Per FS | **When a UE reports both FG11-2a and this [55-6a], the value reported in this FG [55-6a] is used if the configured span pattern of any serving cell satisfies FG55-6.** | Optional with capability signalling |

FIG. 14

| 2 Index | 3 Feature group | 4 Components | 5 Prerequisite feature groups |
|---|---|---|---|
| 55-6b | Mix of Rel-16 PDCCH monitoring capability and Rel. 15 PDCCH monitoring capability on different carriers | Support Rel-15 monitoring capability and Rel-16 PDCCH monitoring capability on different serving cells | FG11-2 for (7, 3) or (4, 3) span based PDCCH monitoring;<br><br>FG55-6 for (2, 2) span based PDCCH monitoring with additional restriction(s) |

| 6 Need for gNB to know if feature is supported | 8 Type (granularity of support) | 9 Note (Proposed) | 10 Mandatory/Optional |
|---|---|---|---|
| Yes | Per FS | **When a UE reports both FG11-2b and this [55-6b], the value reported in this FG [55-6b] is used if the configured span pattern of any serving cell satisfies FG55-6.** | Optional with capability signalling |

FIG. 15

| 2 Index | 3 Feature group | 4 Components | 5 Prerequisite feature groups |
|---|---|---|---|
| 55-6c | Number of carriers for CCE/BD scaling with DL CA with mix of Rel. 16 and Rel. 15 PDCCH monitoring capabilities on different carriers | 1.Supported combination(s) of (pdcch-BlindDetectionCA-R15, pdcch-BlindDetectionCA-R16)<br>- Candidate values for pdcch-BlindDetectionCA-R15 is 1 to 15<br>- Candidate values for pdcch-BlindDetectionCA-R16 is 1 to 15<br><br>2. Supported span arrangement for CA<br>- Candidate value for the component: {aligned spans only, aligned spans and non-aligned spans} | FG11-2b for (7, 3) or (4, 3) span based PDCCH monitoring;<br><br>FG55-6b for (2, 2) span based PDCCH monitoring with additional restriction(s) |

| 6 Need for gNB to know if feature is supported | 8 Type (granularity of support) | 9 Note (Proposed) | 10 Mandatory/Optional |
|---|---|---|---|
| Yes | Per FS | **When a UE reports both FG11-2c and this [55-6c], the value reported in this FG [55-6c] is used if the configured span pattern of any serving cell satisfies FG55-6.** | Optional with capability signalling |

# FIG. 16

| 2 Index | 3 Feature group | 4 Components | 5 Prerequisite feature groups |
|---|---|---|---|
| 55-6d | Capability on the number of CCs for monitoring a maximum number of BDs and non-overlapped CCEs per span for MCG and for SCG when configured for NR-DC operation with Rel-16 PDCCH monitoring on all the serving cells | Supported combination of (pdcch-BlindDetectionMCG-UE-r16, pdcch-BlindDetectionSCG-UE-r16) | FG11-2 for (7, 3) or (4, 3) span based PDCCH monitoring;<br><br>FG55-6 for (2, 2) span based PDCCH monitoring with additional restriction(s) |

| 6 Need for gNB to know if feature is supported | 8 Type (granularity of support) | 9 Note (Proposed) | 10 Mandatory/Optional |
|---|---|---|---|
| Yes | Per FS | **When a UE reports both FG11-2d and this [55-6d], the value reported in this FG [55-6d] is used if the configured span pattern of any serving cell satisfies FG55-6.** | Optional with capability signalling |

FIG. 17

| 2 Index | 3 Feature group | 4 Components | 5 Prerequisite feature groups |
|---|---|---|---|
| 55-6e | Number of carriers for CCE/BD scaling for MCG and for SCG when configured for NR-DC operation with mix of Rel. 16 and Rel. 15 PDCCH monitoring capabilities on different carriers | Supported combination(s) of (pdcch-BlindDetectionMCG-UE-r15, pdcch-BlindDetectionSCG-UE-r15, pdcch-BlindDetectionMCG-UE-r16, pdcch-BlindDetectionSCG-UE-r16) | FG11-2b for (7, 3) or (4, 3) span based PDCCH monitoring;<br><br>FG55-6b for (2, 2) span based PDCCH monitoring with additional restriction(s) |

| 6 Need for gNB to know if feature is supported | 8 Type (granularity of support) | 9 Note (Proposed) | 10 Mandatory/Optional |
|---|---|---|---|
| Yes | Per FS | **When a UE reports both FG11-2e and this [55-6e], the value reported in this FG [55-6e] is used if the configured span pattern of any serving cell satisfies FG55-6.** | Optional with capability signalling |

FIG. 18

| Index (2) | Feature group (3) | Components (4) | Prerequisite feature groups (5) |
| --- | --- | --- | --- |
| 55-6f | Capability on the number of CCs for monitoring a maximum number of BDs and non-overlapped CCEs per span when configured with DL CA with Rel-16 PDCCH monitoring capability on all the serving cells with restriction for non-aligned span case | 1.Capability on the number of CCs for monitoring a maximum number of BDs and non-overlapped CCEs per span when configured with DL CA with Rel-16 PDCCH monitoring capability on all the serving cells<br>-Candidate value for the component: {2, 3, ..., 16}<br><br>2.UE supports aligned span and non-aligned span<br>In case of non-aligned span when the configured number of cells with Rel-16 PDCCH monitoring is larger than the UE reported value, PDCCH monitoring occasion(s) should be configured only on same symbol(s) every slot | FG11-2 for (7, 3) or (4, 3) span based PDCCH monitoring;<br><br>FG55-6 for (2, 2) span based PDCCH monitoring with additional restriction(s) |

| Need for gNB to know if feature is supported (6) | Type (granularity of support) (8) | Note (Proposed) (9) | Mandatory/Optional (10) |
| --- | --- | --- | --- |
| Yes | Per FS | **When a UE reports both FG11-2f and this [55-6f], the value reported in this FG [55-6f] is used if the configured span pattern of any serving cell satisfies FG55-6.** | Optional with capability signalling |

FIG. 19

| Index (2) | Feature group (3) | Components (4) | Prerequisite feature groups (5) |
| --- | --- | --- | --- |
| 55-6g | Number of carriers for CCE/BD scaling with DL CA with mix of Rel. 16 and Rel. 15 PDCCH monitoring capabilities on different carriers with restriction for non-aligned span case | 1.Supported combination(s) of (pdcch-BlindDetectionCA-R15, pdcch-BlindDetectionCA-R16)<br>-Candidate values for pdcch-BlindDetectionCA-R15 is 1 to 15<br>-Candidate values for pdcch-BlindDetectionCA-R16 is 1 to 15<br><br>2.UE supports aligned span and non-aligned span In case of non-aligned span when the configured number of cells with Rel-16 PDCCH monitoring is larger than the UE reported value, PDCCH monitoring occasion(s) should be configured only on same symbol(s) every slot | FG11-2b for (7, 3) or (4, 4) span based PDCCH monitoring;<br><br>FG55-6b for (2, 2) span based PDCCH monitoring with additional restriction(s) |

| Need for gNB to know if feature is supported (6) | Type (granularity of support) (8) | Note (Proposed) (9) | Mandatory/Optional (10) |
| --- | --- | --- | --- |
| Yes | Per FS | **When a UE reports both FG11-2g and this [55-6g], the value reported in this FG [55-6g] is used if the configured span pattern of any serving cell satisfies FG55-6.** | Optional with capability signalling |

FIG. 20

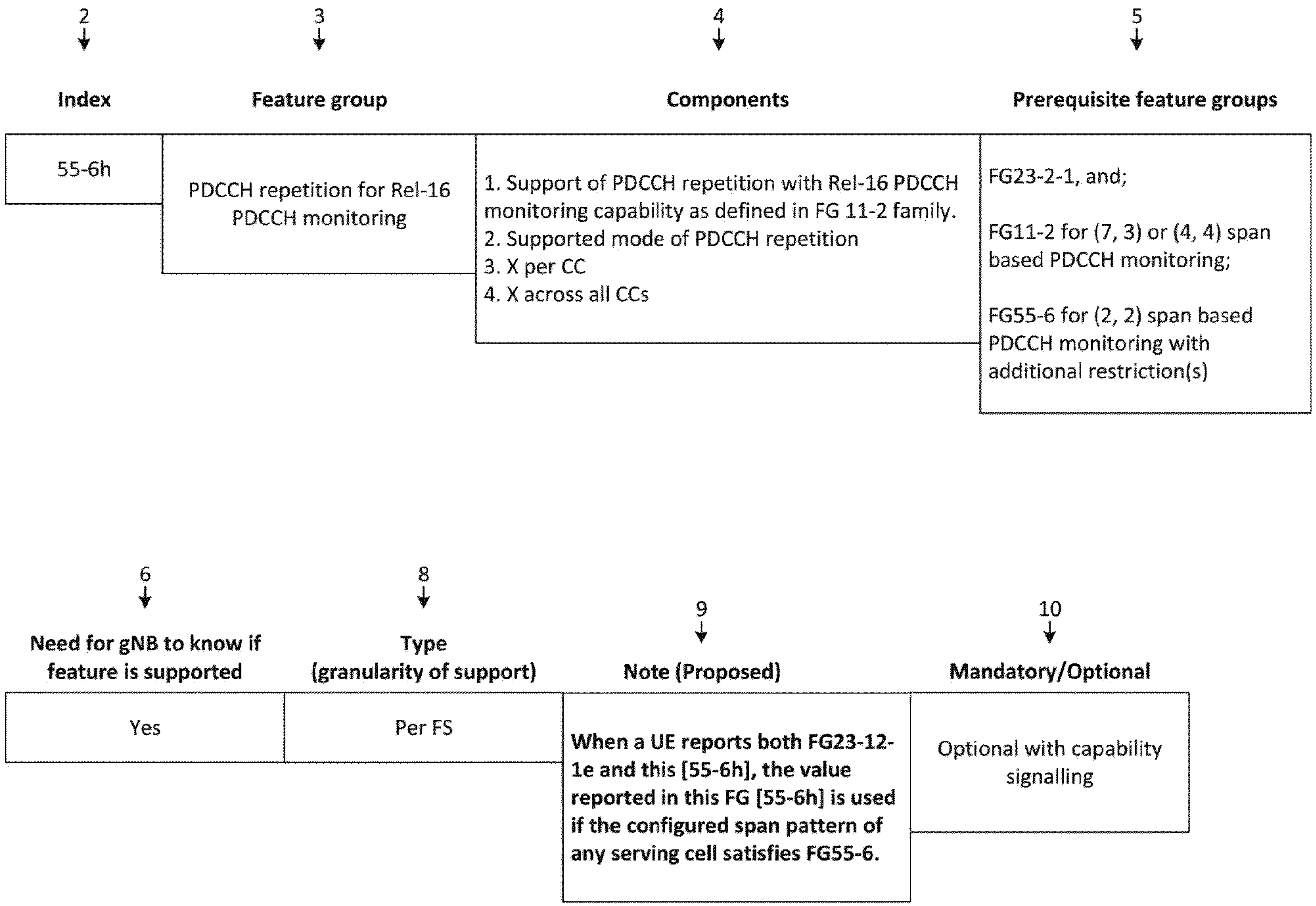
2
Index
55-6h
3
Feature group
PDCCH repetition for Rel-16 PDCCH monitoring
4
Components
1. Support of PDCCH repetition with Rel-16 PDCCH monitoring capability as defined in FG 11-2 family.
2. Supported mode of PDCCH repetition
3. X per CC
4. X across all CCs
5
Prerequisite feature groups
FG23-2-1, and;
FG11-2 for (7, 3) or (4, 4) span based PDCCH monitoring;
FG55-6 for (2, 2) span based PDCCH monitoring with additional restriction(s)
6
Need for gNB to know if feature is supported
Yes
8
Type (granularity of support)
Per FS
9
Note (Proposed)
When a UE reports both FG23-12-1e and this [55-6h], the value reported in this FG [55-6h] is used if the configured span pattern of any serving cell satisfies FG55-6.
10
Mandatory/Optional
Optional with capability signalling

FIG. 21

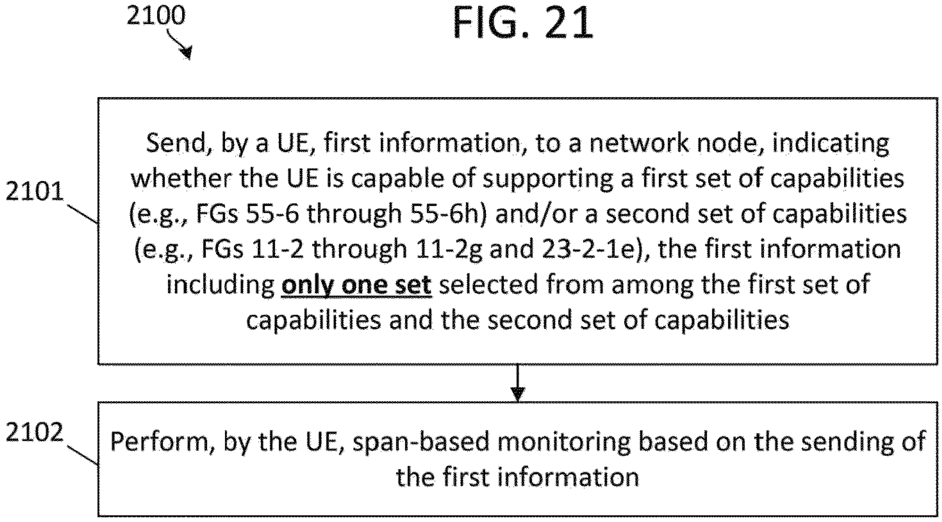
2100
2101
Send, by a UE, first information, to a network node, indicating whether the UE is capable of supporting a first set of capabilities (e.g., FGs 55-6 through 55-6h) and/or a second set of capabilities (e.g., FGs 11-2 through 11-2g and 23-2-1e), the first information including **only one set** selected from among the first set of capabilities and the second set of capabilities
2102
Perform, by the UE, span-based monitoring based on the sending of the first information

FIG. 22

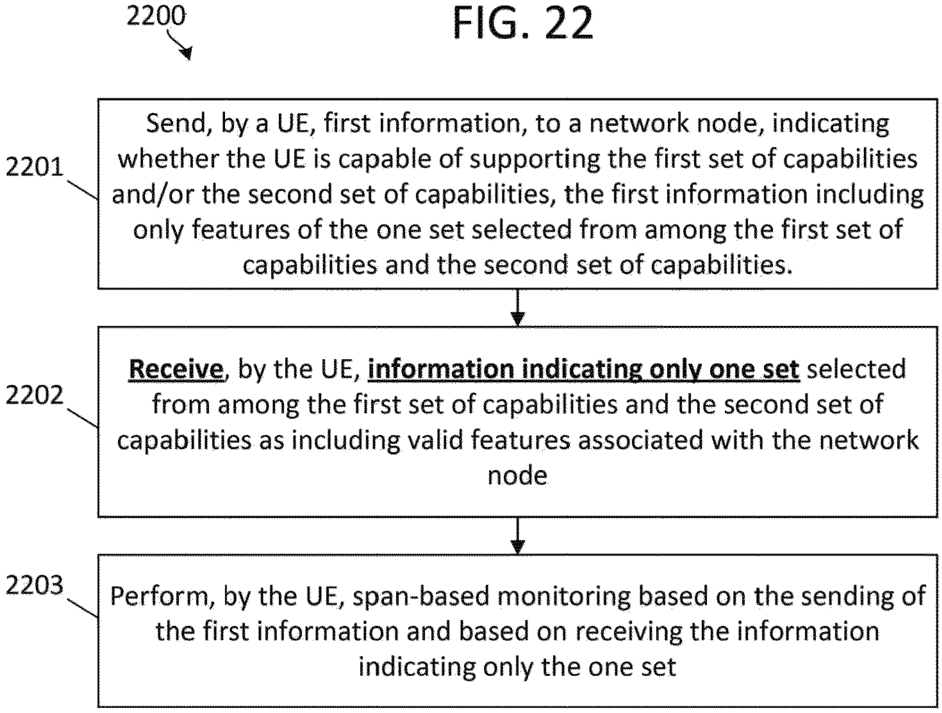
2200
2201
Send, by a UE, first information, to a network node, indicating whether the UE is capable of supporting the first set of capabilities and/or the second set of capabilities, the first information including only features of the one set selected from among the first set of capabilities and the second set of capabilities.
2202
**Receive**, by the UE, **information indicating only one set** selected from among the first set of capabilities and the second set of capabilities as including valid features associated with the network node
2203
Perform, by the UE, span-based monitoring based on the sending of the first information and based on receiving the information indicating only the one set

2300

FIG. 23

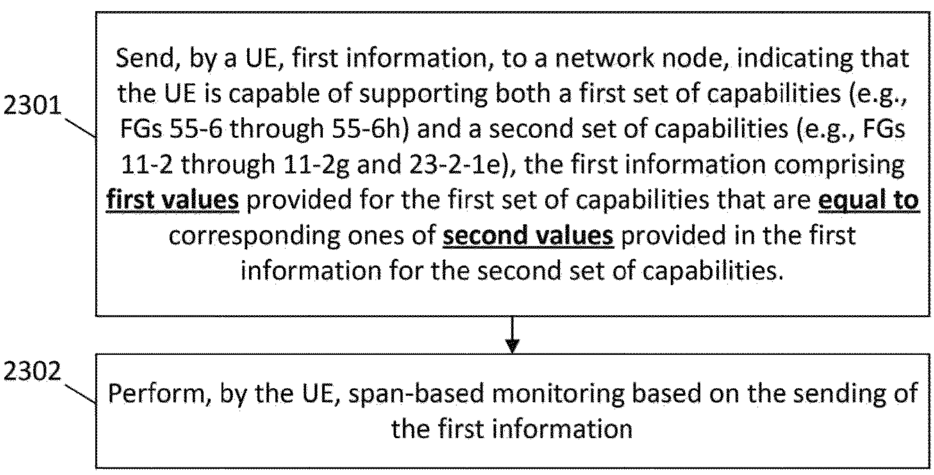


2400

FIG. 24

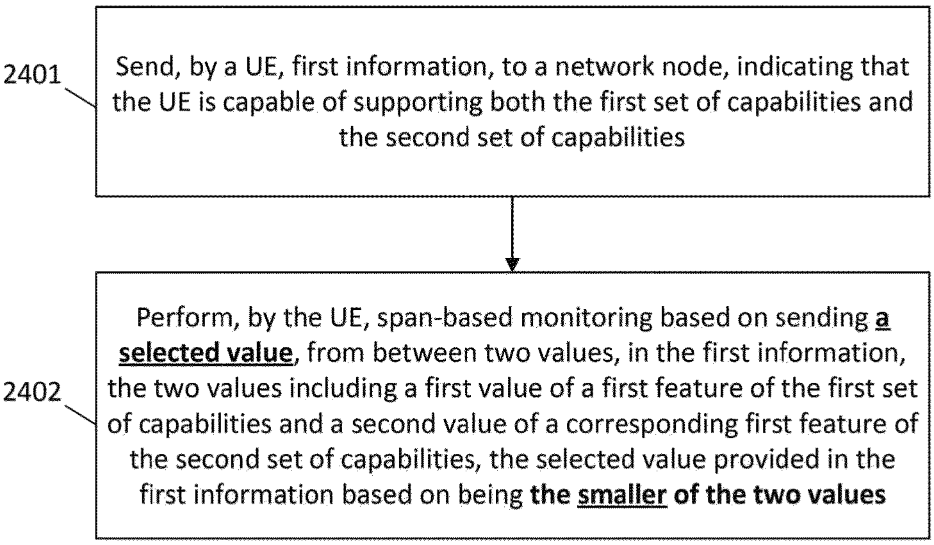

2500

FIG. 25

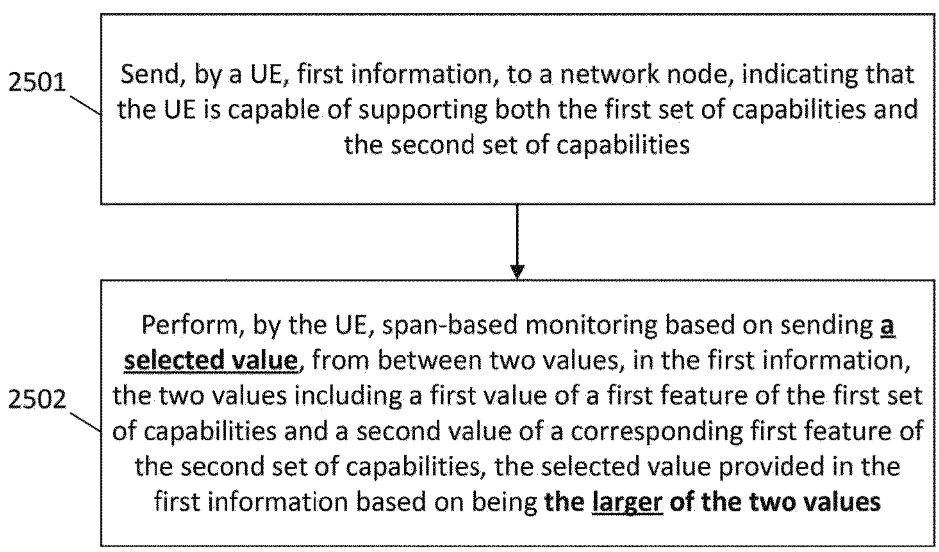


2600

FIG. 26

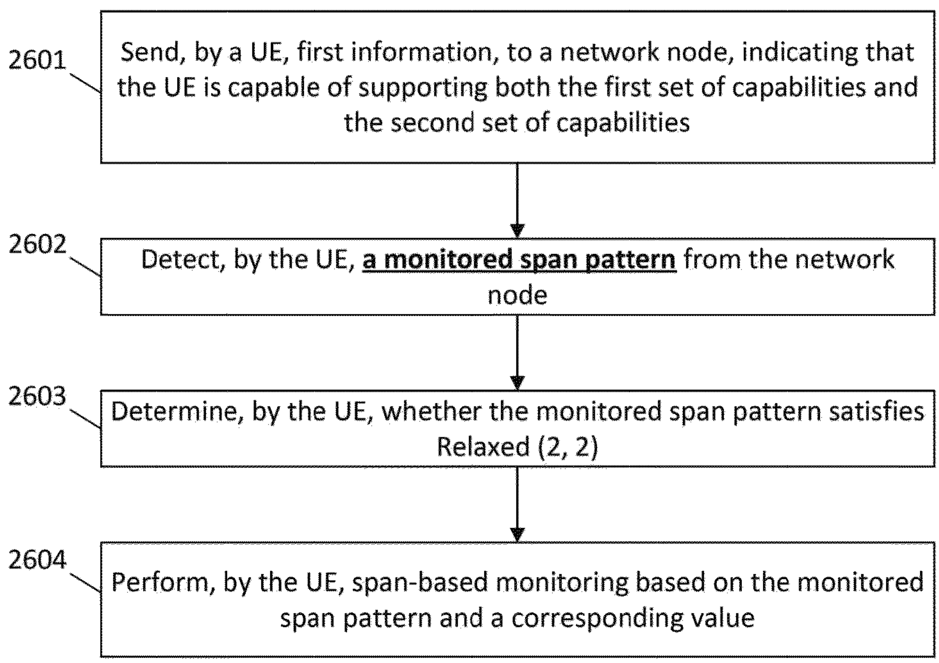

2700

FIG. 27

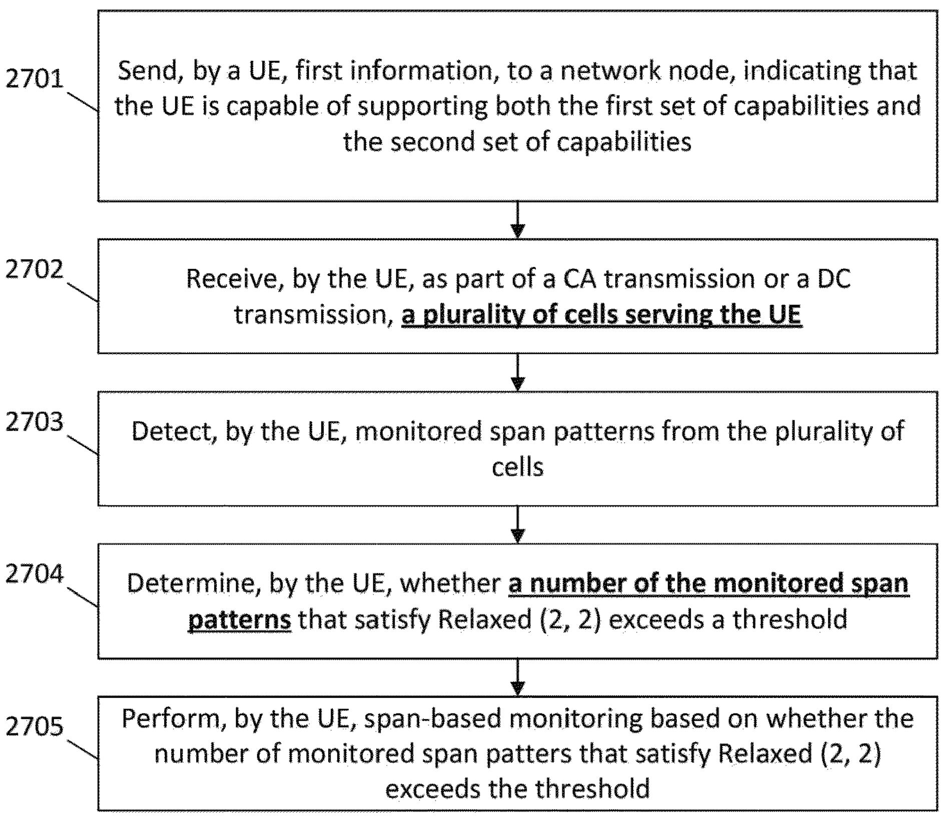
2701
Send, by a UE, first information, to a network node, indicating that the UE is capable of supporting both the first set of capabilities and the second set of capabilities
2702
Receive, by the UE, as part of a CA transmission or a DC transmission, **a plurality of cells serving the UE**
2703
Detect, by the UE, monitored span patterns from the plurality of cells
2704
Determine, by the UE, whether **a number of the monitored span patterns** that satisfy Relaxed (2, 2) exceeds a threshold
2705
Perform, by the UE, span-based monitoring based on whether the number of monitored span patters that satisfy Relaxed (2, 2) exceeds the threshold

2800

FIG. 28

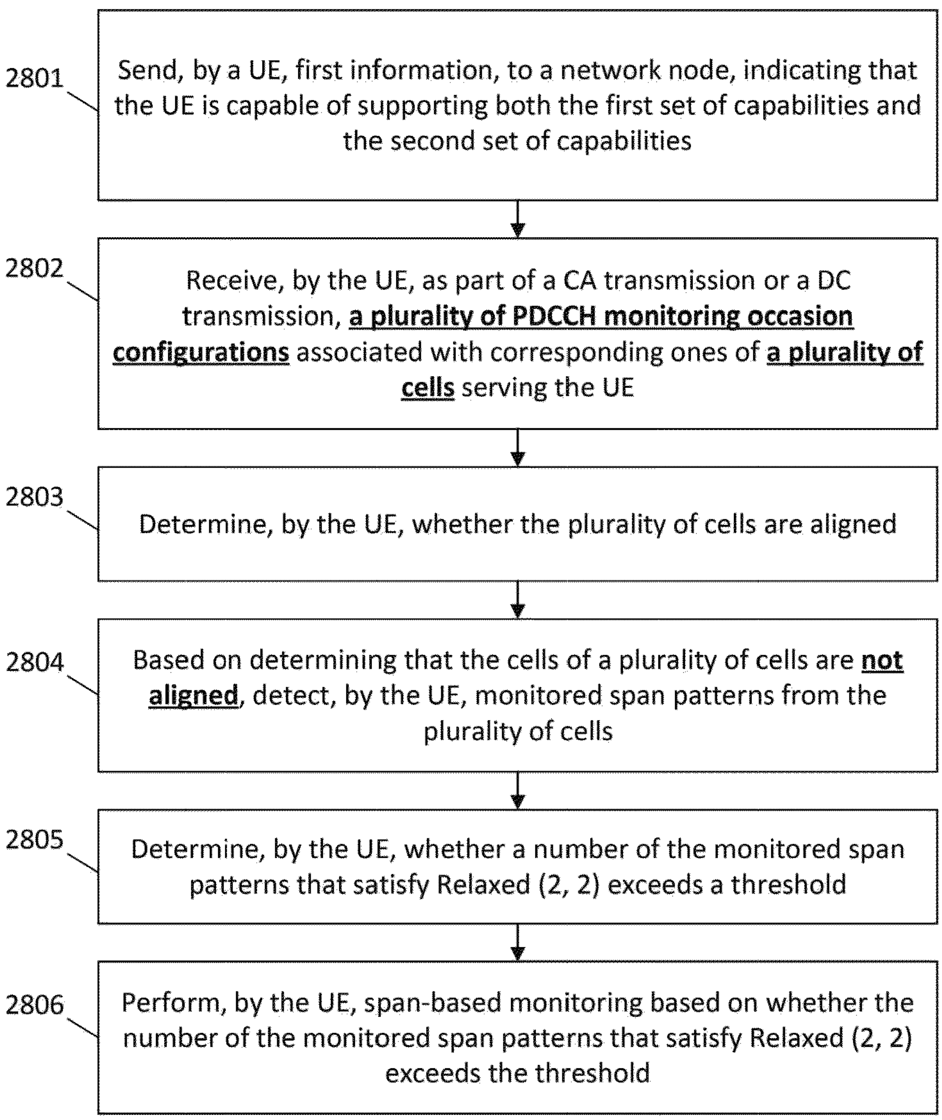
2801
Send, by a UE, first information, to a network node, indicating that the UE is capable of supporting both the first set of capabilities and the second set of capabilities
2802
Receive, by the UE, as part of a CA transmission or a DC transmission, a plurality of PDCCH monitoring occasion configurations associated with corresponding ones of a plurality of cells serving the UE
2803
Determine, by the UE, whether the plurality of cells are aligned
2804
Based on determining that the cells of a plurality of cells are not aligned, detect, by the UE, monitored span patterns from the plurality of cells
2805
Determine, by the UE, whether a number of the monitored span patterns that satisfy Relaxed (2, 2) exceeds a threshold
2806
Perform, by the UE, span-based monitoring based on whether the number of the monitored span patterns that satisfy Relaxed (2, 2) exceeds the threshold

FIG. 29

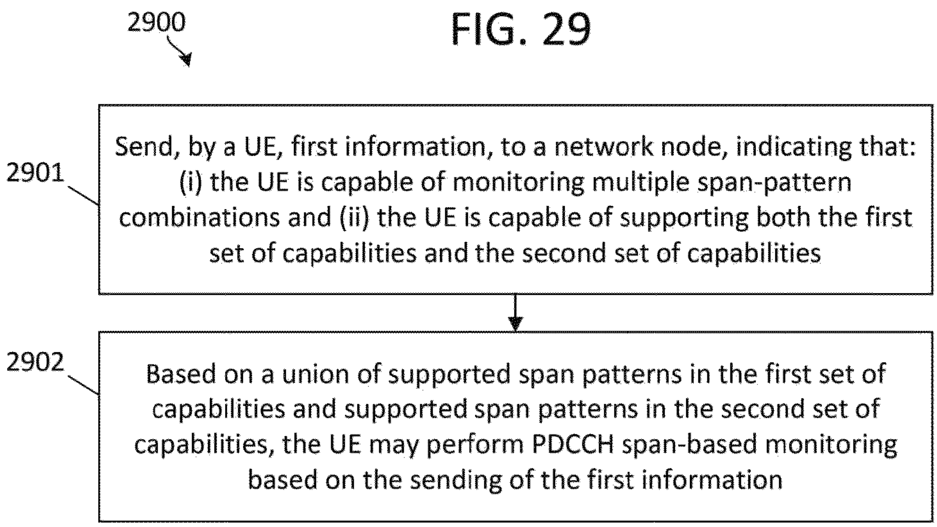
2900
2901
Send, by a UE, first information, to a network node, indicating that: (i) the UE is capable of monitoring multiple span-pattern combinations and (ii) the UE is capable of supporting both the first set of capabilities and the second set of capabilities
2902
Based on a union of supported span patterns in the first set of capabilities and supported span patterns in the second set of capabilities, the UE may perform PDCCH span-based monitoring based on the sending of the first information

FIG. 30

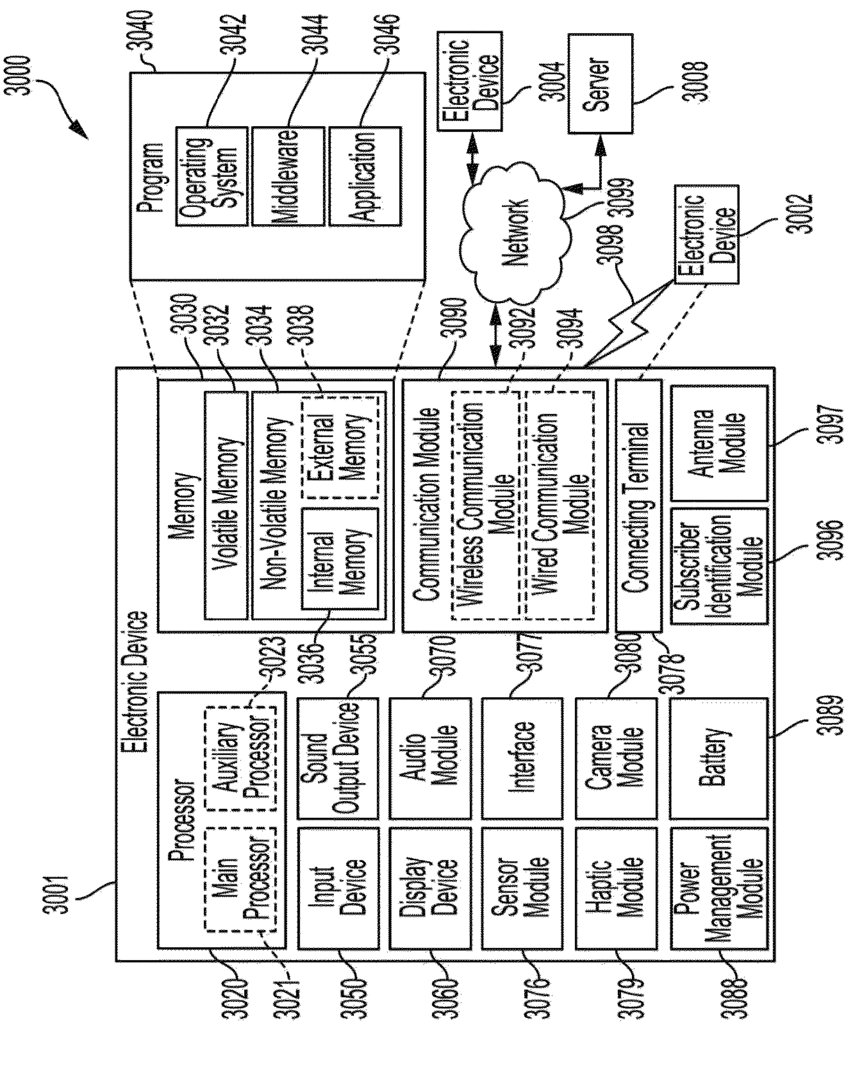
3000
Electronic Device
3001
Processor
Main Processor
Auxiliary Processor
3020
3021
3023
Memory
Volatile Memory
Non-Volatile Memory
Internal Memory
External Memory
3030
3032
3034
3036
3038
Program
Operating System
Middleware
Application
3040
3042
3044
3046
Input Device
3050
Sound Output Device
3055
Display Device
3060
Audio Module
3070
Sensor Module
3076
Interface
3077
Haptic Module
3079
Camera Module
3080
Connecting Terminal
3078
Power Management Module
3088
Battery
3089
Communication Module
Wireless Communication Module
Wired Communication Module
3090
3092
3094
Subscriber Identification Module
3096
Antenna Module
3097
Network
3098
3099
Electronic Device
3002
Electronic Device
3004
Server
3008

Europäisches Patentamt
European Patent Office
Office européen des brevets

# EUROPEAN SEARCH REPORT

Application Number
EP 24 20 5857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUALCOMM INCORPORATED: "Discussion on NR Rel-16 UE features", 3GPP DRAFT; R1-2008631, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20201026 - 20201113 1 November 2020 (2020-11-01), XP052350561, Retrieved from the Internet: URL:https://ftp.3gpp.org/tsg_ran/WG1_RL1/TSGR1_103-e/Docs/R1-2008631.zip R1-2008631 Discussion on NR Rel-16 UE Features.docx [retrieved on 2020-11-01] | 1,4-6, 11,12, 14,15 | INV. H04L5/00 H04L1/00 H04W72/23 |
| A | * page 5 - page 34 * ----- | 8-10 | |
| X | QUALCOMM INCORPORATED: "Discussion on NR Rel-16 UE features", 3GPP DRAFT; R1-2008631, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20201026 - 20201113 22 October 2020 (2020-10-22), XP051941585, Retrieved from the Internet: URL:https://ftp.3gpp.org/tsg_ran/WG1_RL1/TSGR1_103-e/Docs/R1-2008631.zip R1-2008631 Discussion on NR Rel-16 UE Features.docx [retrieved on 2020-10-22] | 1-5,11, 12,14,15 | TECHNICAL FIELDS SEARCHED (IPC) |
| A | * page 5 - page 7 * ----- -/-- | 8-10 | H04L H04W |

The present search report has been drawn up for all claims

| Place of search | Date of completion of the search | Examiner |
|---|---|---|
| The Hague | 27 February 2025 | Dupuis, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

page 1 of 2

Europäisches Patentamt
European Patent Office
Office européen des brevets

# EUROPEAN SEARCH REPORT

Application Number
EP 24 20 5857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2021/066311 A1 (LG ELECTRONICS INC [KR]) 8 April 2021 (2021-04-08)<br>* paragraph [0231] - paragraph [0296] *<br>----- | 1-3,5, 11,12,15<br>8-10 | |
| X | US 2021/282001 A1 (SABER HAMID [US] ET AL) 9 September 2021 (2021-09-09)<br>* paragraph [0057] - paragraph [0123] *<br>----- | 1-3, 5-13,15 | |
| X<br>A | US 2022/225393 A1 (GAO FEI [CN] ET AL) 14 July 2022 (2022-07-14)<br>* paragraph [0017] - paragraph [0160] *<br>----- | 1-3,5, 11-13,15<br>8-10 | |

TECHNICAL FIELDS SEARCHED (IPC)

The present search report has been drawn up for all claims

2

| Place of search | Date of completion of the search | Examiner |
|---|---|---|
| The Hague | 27 February 2025 | Dupuis, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 24 20 5857

This annex lists the patent family members relating to the patent documents cited in the above-mentioned European search report. The members are as contained in the European Patent Office EDP file on
The European Patent Office is in no way liable for these particulars which are merely given for the purpose of information.

27-02-2025

| Patent document cited in search report | Publication date | Patent family member(s) | Publication date |
|---|---|---|---|
| WO 2021066311 A1 | 08-04-2021 | NONE | |
| US 2021282001 A1 | 09-09-2021 | CN 113365354 A | 07-09-2021 |
| | | EP 3876467 A1 | 08-09-2021 |
| | | KR 20210113040 A | 15-09-2021 |
| | | TW 202135501 A | 16-09-2021 |
| | | US 2021282001 A1 | 09-09-2021 |
| | | US 2023254685 A1 | 10-08-2023 |
| US 2022225393 A1 | 14-07-2022 | CN 114375592 A | 19-04-2022 |
| | | EP 4030821 A1 | 20-07-2022 |
| | | US 2022225393 A1 | 14-07-2022 |
| | | WO 2021062843 A1 | 08-04-2021 |

EPO FORM P0459

For more details about this annex : see Official Journal of the European Patent Office, No. 12/82